# EUROPEAN PATENT SPECIFICATION

(11) **EP 2 984 450 B1**
(45) Date of publication and mention of the grant of the patent: **23.03.2022**
(21) Application number: 14708242.4
(22) Date of filing: 05.03.2014
(51) Int. Cl.: G01C 21/20

(54) **METHOD AND APPARATUS FOR PROVIDING INTERACTIVE THREE-DIMENSIONAL INDOOR ENVIRONMENTS**
VERFAHREN UND VORRICHTUNG ZUR BEREITSTELLUNG VON INTERAKTIVEN DREIDIMENSIONALEN INNENRÄUMEN
PROCÉDÉ ET APPAREIL POUR LA CRÉATION D'ENVIRONNEMENTS INTÉRIEURS TRIDIMENSIONNELS INTERACTIFS

(30) Priority: 12.04.2013 US 201313861929
(43) Date of publication of application: 17.02.2016
(73) Proprietor: HERE Global B.V., 5611 ZT Eindhoven (NL)
(72) Inventor: ASIKAINEN, Kalle, 00210 Helsinki (FI); SUNI, Mikko, 02400 Kirkkonummi (FI); SINGH, Manish, 02660 Espoo (FI); HEINONEN, Jarkko, 00820 Helsinki (FI); TUSSIOT, Alexandre, 02230 Espoo (FI); SYRJÄNEN, Sampo, 00740 Helsinki (FI); VIRTANEN, Joni, 00400 Helsinki (FI); BASFORD, Robert, 10600 Raasepori (FI)
(74) Representative: Potter Clarkson
(86) International application number: PCT/EP2014/054204
(87) International publication number: WO 2014/166675

(56) References cited:
- EP-A2- 2 472 226
- US-A1- 2008 077 326
- US-A1- 2010 299 065
- US-A1- 2011 161 855
- US-A1- 2011 246 062
- US-A1- 2012 105 202

## Description

### BACKGROUND

Service providers and device manufacturers (e.g., wireless, cellular, etc.) are continually challenged to deliver value and convenience to consumers by, for example, providing compelling network services. One area of interest has been the development of location-based services (e.g., navigation services, mapping services, positioning services, etc.) to help orient, route, and guide users of mobile devices (e.g., mobile phones, tablets, and/or personal navigation devices (PNDs)) with their travels, whether on foot or in a vehicle. Current navigation and/or mapping applications include some interior place data that allows users to search indoor spaces of popular destinations and buildings (e.g., shopping malls, airports, etc.). However, current interior maps are generally two-dimensional and show a user only one level of a building at a time. Moreover, unlike with outdoor maps, where viewing two or more points of interest (POIs) can be achieved by zooming out, zooming out of current indoor maps can often be inefficient and/or irrelevant (e.g., trying to view two or more indoor POIs on different levels at the same time). In addition, navigation of current digital maps (e.g., zooming and/or panning) generally requires two-finger interaction with a touch screen, for example, which often requires holding the device with two hands. Requiring the use of two hands can make navigating an interior venue difficult for a user since he or she often has only one hand available because the other hand is being used to open doors, carry bags, etc. Accordingly, service providers and device manufacturers face significant technical challenges in providing a three-dimensional indoor mapping interface that enables users to navigate, explore, and toggle between whole-building and one-level views of various POIs using a single-point of interaction (e.g., a thumb or a finger).

US 2008/077326 A1 relates to methods and systems for locating and monitoring the status of people and moveable assets, such as firefighters, both indoors and outside, particularly in environments where GPS systems do not operate or have limited operation. The system uses various methods to determine the location/orientation/motion of people and moveable assets, and communicates with an external monitoring station to receive requests for and/or to transmit the location/orientation/motion data. The system can also include a Building Database which can be used to provide a visual representation of a building such as using satellite imagery and/or floorplans.

EP 2472226 A2 relates to a system and method for producing a model of the interior of a building. The model can receive and dynamically incorporate input from various sources such as existing map data, data provided by persons on the scene but outside the building and real-time data from sensors located on mobile persons or assets moving around inside the building.

US 2010/299065 A1 relates to systems and methods for generating a route using an open area map, such as an open area map corresponding to a floor of a building. A path segment record and/or a node record is created based on the generated route.

US 2011/246062 A1 relates to a mapping and directions system for generating a travel route from an origin to a destination including at least one ground level travel portion and at least one vertical travel portion. The system may generate a graphical display of the travel route.

US 2012/105202 A1 relates to displaying, on a mobile device, a real time view of a user's environment within a building; communicating wirelessly in the building with a location tracking system operable to identify a location of the mobile device relative to one or more elements in the real time view; and displaying a computer generated overlay on the real time view, the overlay including location information associated with the elements.

US 2011/161855 A1 relates to visually indicating location probability, particularly in a multi-level, three-dimensional environment. A graphical user interface may be provided that displays the uncertain location of a device within an environment in an easily discernable format.

US2010/0153160 relates to visual representations of 2D floor maps indicating availability information of rooms using multiple levels of specificity.

### SOME EXAMPLE EMBODIMENTS

Therefore, there is a need for an approach for providing a three-dimensional indoor mapping interface that enables users to navigate, explore, and toggle between whole-building and one-level views of various POIs using a single-point of interaction.

According to the invention a method comprises causing the steps of claim 1.

According to the invention, an apparatus comprises at least one processor, and at least one memory including computer program code for one or more computer programs, the at least one memory and the computer program code configured to, with the at least one processor, cause, at least in part, the apparatus to carry out the method of claim 1.

According to the invention, a computer-readable storage medium carries one or more sequences of one or more instructions as defined by claim 11.

According to the invention, an apparatus comprises means for performing the method of claim 1.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

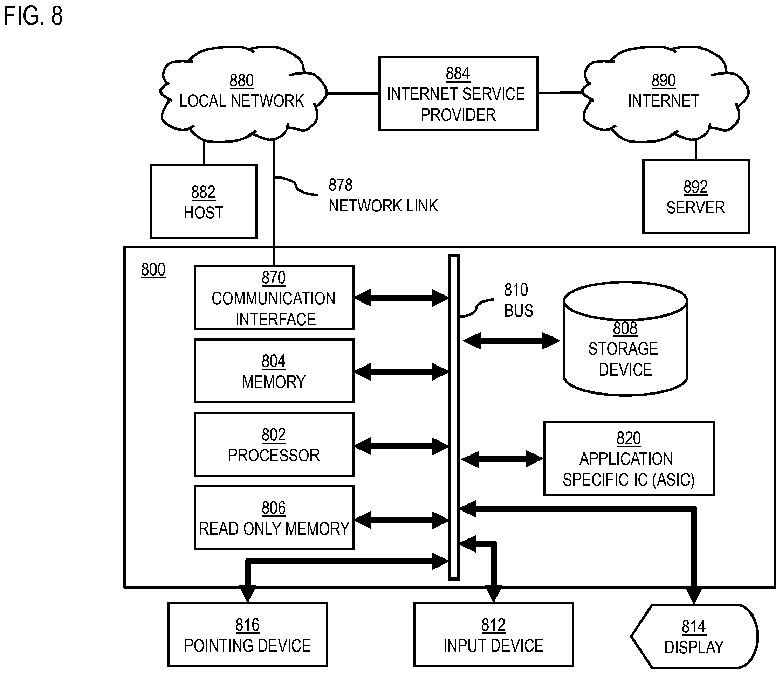

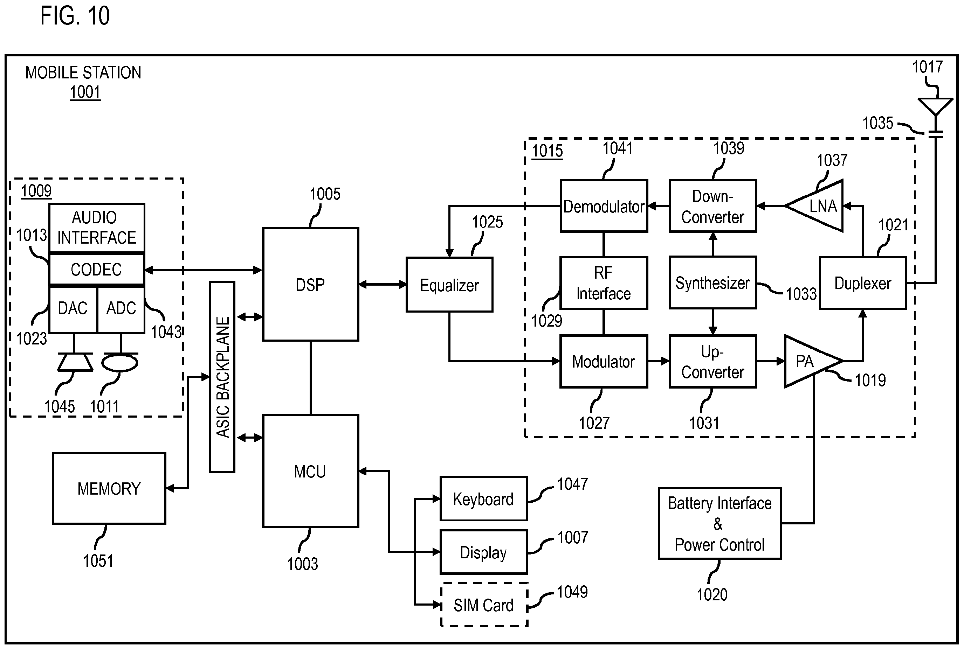

In various example embodiments, the methods (or processes) can be accomplished on the service provider side (e.g., via the computer system of FIG. 8) or on the mobile device side (e.g., via the mobile device of FIG. 10) or in any shared way between service provider and mobile device with actions being performed on both sides.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention as defined by the claims. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing a three-dimensional indoor mapping interface that enables users to navigate, explore, and toggle between whole-building and one-level views of various POIs using a single-point of interaction, according to one embodiment;
FIG. 2 is a diagram of the components of a positioning platform, according to one embodiment;
FIG. 3 is a diagram of a work flow for providing a three-dimensional indoor mapping interface that enables users to navigate, explore, and toggle between whole-building and one-level views of various POIs using a single-point of interaction, according to one embodiment;
FIGs. 4-6 are flowcharts of processes for providing a three-dimensional indoor mapping interface that enables users to navigate, explore, and toggle between whole-building and one-level views of various POIs using a single-point of interaction, according to one embodiment;
FIGs. 7A-7C are diagrams of user interfaces utilized in the processes of FIGs. 4-6, according to various embodiments;
FIG. 8 is a diagram of hardware that can be used to implement an embodiment of the invention;
FIG. 9 is a diagram of a chip set that can be used to implement an embodiment of the invention; and
FIG. 10 is a diagram of a mobile device that can be used to implement an embodiment of the invention.

### DESCRIPTION OF SOME EMBODIMENTS

Examples of a method, apparatus, and computer program for providing a three-dimensional indoor mapping interface that enables users to navigate, explore, and toggle between whole-building and one-level views of various POIs using a single-point of interaction are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

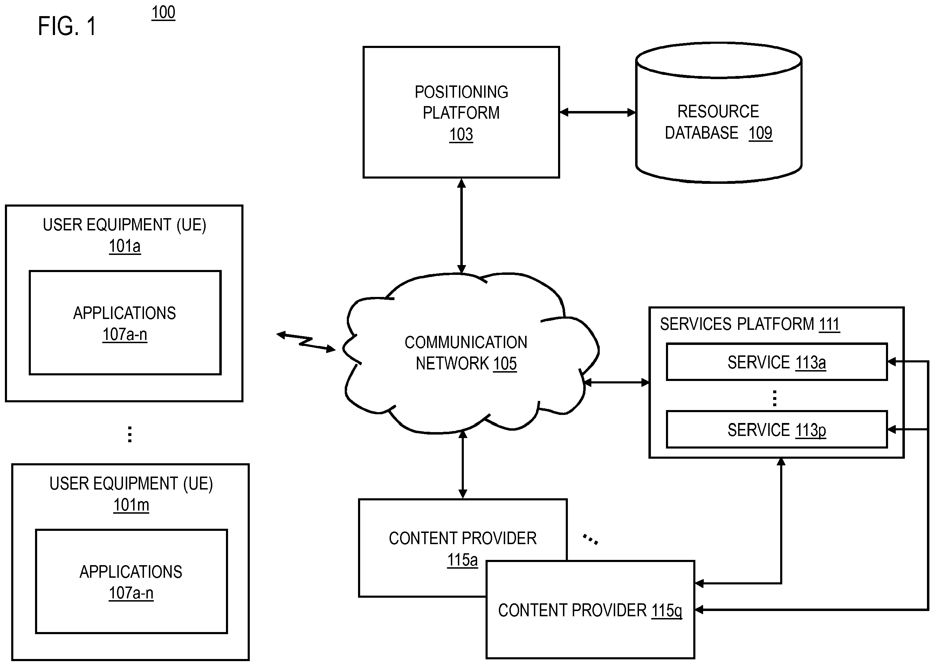

FIG. 1 is a diagram of a system capable of providing a three-dimensional indoor mapping interface that enables users to navigate, explore, and toggle between whole-building and one-level views of various POIs using a single-point of interaction, according to one embodiment. As previously discussed, one area of interest among service providers and device manufacturers has been the development of location-based services (e.g., navigation services, mapping services, positioning services, etc.) to help orient, route, and guide users of mobile devices with their travels. Current navigation and/or mapping applications include some interior place data that allows users to search indoor spaces of popular destinations and buildings (e.g., shopping malls, airports, etc.). However, current interior maps are generally two-dimensional and show a user only one level of a POI at a time. Moreover, whereas zooming out with an outdoor map enables a user to view two or more POIs at the same time, zooming out of most indoor maps can often be inefficient and/or irrelevant (e.g., trying view two of more indoor POIs on different levels at the same time). In addition, navigation of current digital maps (e.g., zooming, rotating, and/or panning) generally requires two-finger interaction with a touch screen, for example, which often requires holding the device with two hands. Holding a device with two hands while navigating an interior venue is often difficult for a user because he or she often has only one hand available because the other hand is being used to open doors, carry bags, etc.

To address this problem, a system 100 of FIG. 1 introduces the capability to provide a three-dimensional indoor mapping interface that enables users to navigate, explore, and toggle between whole-building and one-level views of various POIs using a single-point of interaction. As shown in FIG. 1, the system 100 comprises one or more user equipment (UE) 101a-101m (e.g., mobile phones, tablets, and/or PNDs) (also collectively referred to as UEs 101) having connectivity to a positioning platform 103 via a communication network 105. The UEs 101 also include or have access to one or more applications 107a-107n (also collectively referred to as applications 107). By way of example, the applications 107 may include mapping and/or navigation applications, a calendaring application, a spreadsheet application, location-based applications (e.g., enabling location "check-ins"), messaging applications, social networking applications, an Internet browser, media applications, etc. In one embodiment, the positioning platform 103 is a computer system (e.g., a server) as described with respect to the FIG. 8 below. In addition, the UEs 101 also have connectivity to one another based, at least in part, on one or more short-range wireless communication technologies (e.g., Bluetooth^{®}, Bluetooth LE (BLE), Near Field Communication (NFC), wireless fidelity (WiFi), or a combination thereof).

In one embodiment, the positioning platform 103 may include or be associated with at least one resource database 109. In one example embodiment, the at least one resource database 109 may exist in whole or in part within the positioning platform 103, or independently. More specifically, the at least one resource database 109 may include one or more three-dimensional models depicting at least one indoor environment including, at least in part, one level of the indoor environment, one or more representations of a plurality of levels of the indoor environment, an entirety of the indoor environment, or a combination thereof. The at least one resource database 109 may also include one or more listings of one or more resources within the indoor environment, availability information pertaining to the one or more resources (e.g., one or more corresponding data entries in a calendaring application, a spreadsheet application, or a combination thereof), one or more representations of one or more users within the indoor environment, one or more seating arrangements and/or workplace assignments, as well as one or more protocols for generating one or more heat maps based, at least in part, on the one or more users.

The UEs 101 are also connected to a services platform 111 via the communication network 105. The services platform 111 includes one or more services 113a-113p (also collectively referred as services 113). The services 113 may include a wide-variety of content provisioning services for the applications 107. By way of example, the services 113 may include mapping services, navigation services, three-dimensional modeling services, location-based services, social networking services, media services, etc. The UEs 101, the services platform 111, and the services 113 also have connectivity to one or more content providers 115a-115q (also collectively referred to as content providers 115). The content providers 115 also may provision a wide variety of content (e.g. maps, three-dimensional models, POI information, media, etc.) to the components of the system 100.

By way of example, the communication network 105 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth^{®}, Internet Protocol (IP) data casting, satellite, mobile ad-hoc network (MANET), and the like, or any combination thereof.

The UEs 101 are any type of mobile terminal, fixed terminal, or portable terminal including a mobile device, phone, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is noted that, in the various embodiments described herein, the term mobile device is used synonymously with the UEs 101, mobile terminal, mobile phone, and/or any other mobile device listed above. It is also contemplated that the UEs 101 can support any type of interface to the user (such as "wearable" circuitry, etc.). In one embodiment, the UEs 101 are mobile devices (e.g., handsets, mobile phones, etc.) as described with respect to FIG. 10 below.

In one embodiment, the system 100 causes, at least in part, a presentation of at least one mapping user interface depicting at least one indoor environment (e.g., a shopping mall, an airport, a transit hub, an office complex, etc.), wherein the at least one mapping interface includes, at least in part, (a) a first view depicting one or more representations of one level of the at least one indoor environment, and (b) a second view depicting one or more other representations of a plurality of levels of the at least one indoor environment, an entirety of the at least one indoor environment, or a combination thereof. In particular, the presentation of at least one mapping user interface by the system 100 includes, at least in part, one or more three-dimensional models of the at least one indoor environment. As a result, the system 100 enables a user to toggle back and forth between a whole-building view and a one-level view of the three-dimensional model of the at least one indoor environment so that the user can see the relative position of one or more areas of interest in relation to the entire building and/or in relation to a single floor or level from any number of points of view.

In one or more embodiments, the system 100 provides at least one mode of interaction for operating the at least one mapping user interface, wherein the at least one mode of interaction is based, at least in part, on one or more gestures using a single-point of interaction with a device sensor (e.g., a mobile device display screen) including, at least in part, at least one one-thumb gesture, at least one one-finger gesture, or a combination thereof. In particular, the one or more gestures are associated with one or more zooming functions, one or more rotating functions, one or more panning functions, or a combination thereof. By way of example, the system 100 can enable a user to zoom out of a map with an upward swipe, zoom into a map with a downward swipe, rotate a map to the left or right with a swipe to the left of right, respectively, and/or pan a map by using a long press and then moving a finger across the device sensor. In one embodiment, the system 100 may cause, at least in part, a rendering of the initiation, the one or more gestures using a single-point of interaction, or a combination thereof (e.g., as a cursor). In one or more embodiments, it is contemplated that the at least one mode of interaction may also be based, at least in part, on at least one two-finger gesture (e.g., rotating the map with a simultaneous push or pull of the thumb and a pull or push of the index finger). Also, in one embodiment, it is contemplated that at least one tilt input of a device (e.g., a mobile phone) associated with the at least one mapping user interface will cause, at least in part, a change of the viewing angle of the interface to enable the system 100 to present a three-dimensional visualization of the at least one indoor environment when the device is not in a horizontal position. Further, in one or more embodiments, the at least one mapping user interface may include a feedback option wherein a user can provide the system 100 and/or one or more integrated systems (e.g., a facility maintenance system) substantially up-to-date information (e.g., one or more feedback reports) about the condition of one or more resources (e.g., an untidy conference room, a missing chair, a broken light, etc.). In one embodiment, the feedback report would include the correct location information for the one or more resources automatically. Moreover, in one or more embodiments, if the system 100 determines multiple feedback reports from the same location and/or pertaining to the same issue, the system 100 could indicate (even automatically) to one or more facility maintenance system users, for example, an issue that could deserve prioritization to resolve.

In one embodiment, the system 100 causes, at least in part, a presentation of one or more resource representations in the at least one mapping interface, wherein the one or more resource representations depict one or more resources present within the one level, the plurality of levels, the entirety, or a combination thereof of the at least one indoor environment. By way of example, the one or more resources may include any large-scale objects within the at least one indoor environment (e.g., a conference room, a parking space, an office workspace, a restaurant table, large-scale merchandise commonly sold in retail stores, etc.). For example, in the office complex example use case, the system 100 can cause, at least in part, a presentation of one or more conference rooms within the entire complex and/or one or more conference rooms located on just one floor based, at least in part, on at least one mode of interaction with the at least one mapping user interface (e.g., a tapping gesture to increase or decrease the number of visible floors of the at least one indoor environment). In addition, the system 100 can cause, at least in part, the presentation of the one or more resources based, at least in part, on one or more substantially realistic three-dimensional models (e.g., a model based on exact dimensions or three-dimensional scanning), one or more symbolic representations, or a combination thereof depending on the one or more computational resources, for example, of the mobile device associated with the at least one mapping user interface. In one or more embodiments, the system 100 determines availability information for the one or more resources for the presentation in the at least one mapping user interface. More specifically, the system 100 can determine the availability information based, at least in part, on one or more corresponding data entries in a calendaring application 107, a spreadsheet application 107, or a combination thereof associated with the at least one resource database 109, one or more services 113, one or more content providers 115, or a combination thereof. In certain embodiments, the system 100 can determine the availability information based, at least in part, on the availability of one or more users that have accepted an invitation, for example, to attend a meeting. By way of example, the system 100 can present the availability information in the at least one mapping user interface based, at least in part, on one or more colors. For example, the system 100 can present the one or more available resources as green resources, for example, and one or more unavailable resources as red resources, for example.

In one embodiment, it is contemplated that the system 100 can cause, at least in part, the presentation of the availability information based, at least in part, on one or more levels of specificity. For example, the system 100 can present the availability information based, at least in part, on how soon or how far away in date and/or time the one or more resources may become available. More specifically, in one example use case, the system 100 can cause, at least in part, a presentation of the availability information as one or more gradations of green or red, for example, so that a user can quickly determine whether to push a meeting back 30 minutes, for example, to use a particular conference room or whether to move the proposed meeting to another floor or another building where one or more conference rooms are currently available. In one embodiment, the one or more levels of specificity may include at least one measure of suitability (e.g., in terms of space and/or functionality). For example, a user may be searching for a conference room that can seat eight people. As a result of the user's query, the system 100 can represent an available conference room that can seat eight people as a green conference room and a conference room that can seat only six people as a yellow conference room since one or more people may have to stand. Moreover, in one or more embodiments, the system 100 can cause, at least in part, the presentation of the availability information based, at least in part, on one or more feedback reports and/or information about the condition of the one or more resources (e.g., an untidy conference room, a missing chair, a broken light, etc.). By way of example, whereas the system 100 can render one or more available resources as green resources, for example, the system 100 can render one or more currently defective resources as light green or even yellow resources, for example. In particular, the system 100 can cause, at least in part, the condition information (e.g., one or more fault reports) to be presented to a public user and/or presented only internally (e.g., among one or more facility maintenance system users). Similarly, a user may be searching for a conference room having video projection capabilities, for example. Consequently, the system 100 can represent an available conference room with dedicated video projection capabilities as a green conference room and a conference room without such capabilities as a yellow conference room since such capabilities may be added to the room on an ad hoc basis. Further, in an example use case involving restaurant seating, the system 100 can present the availability information in terms of both availability and suitability. For example, the system 100 can represent a table with the best view in the restaurant as a green table, for example, and a table with a poor view as a dark yellow or orange table, for example.

In one or more embodiments, the system 100 can determine the availability information for the one or more resources (e.g., a conference room, a parking space, a restaurant table, etc.) over one or more time periods based, at least in part, on a single-point of interaction with the at least one mapping user interface. In particular, the one or more time periods include, at least in part, one or more dates, one or more hours of a day, or a combination thereof. Moreover, in one embodiment, it is contemplated that a user can user a single-point interaction to enter a date and/or a time by manipulating one or more interactive interface elements associated with the at least one mapping user interface. For example, the mapping user interface may include, at least in part, left and right arrows to increase or decrease the date, plus and minus symbols to increase or decrease the time, a sliding bar to view a timeline of availability information, or a combination thereof. In certain embodiments, the sliding bar may have an area to "grip" (e.g., a white square), which can be move right or left (i.e., back or ahead in time, respectively). In one embodiment, the system 100 can represent the length of the grip to correspond to a desired time interval or time slot for the one or more resources (e.g., 15 minutes, 30 minutes, 1 hour, 2 hours, etc.). In one example use case, a user can first select a desired time interval (e.g., 15 minutes from a look-up table that appears when a user touches the sliding bar) and then he or she can move the corresponding grip along the timeline (e.g., ahead in time). As a result, the system 100 can present the part of the timeline indicating the amount of time until the reservation of the resource (e.g., a conference room for a meeting) as red or as something different from the presentation of the timeline and/or grip. Moreover, the system 100 can simultaneously present the availability information of the one or more resources matching the required time interval or time slot in the at least one mapping user interface. As a result, it is contemplated that by moving the sliding bar, the user can easily view the availability of one or more corresponding resources within the indoor environment. In one embodiment, it is contemplated that the system 100 can also determine availability information over a period of time based, at least in part, on at least one voice command (e.g., "Is Room 1 available on May 12^{th} at 4:00 p.m.?").

In one embodiment, the system 100 determines at least one reservation of the one or more resources based, at least in part, on the at least one mode of interaction, the availability information, or a combination thereof. By way of example, the system 100 can determine the at least one reservation based, at least in part, on a single-point of interaction directly with the one or more resources (e.g., tapping an available conference room), with one or more interactive interface elements (e.g., a "send request" button), or a combination thereof. In one example use case, if the system 100 determines that a user has selected a particular resource (e.g., based on a tapping gesture), then the system 100 can cause, at least in part, the at least one mapping user interface to switch to another user interface (e.g., a general data entry interface) that can enable a user to mark the location of the resource, share the location of the resource, view the status or capacity of the resource, as well as initiate a request to make a reservation of the resource. In addition, the system 100 can also then cause, at least in part, a presentation of another user interface (e.g., another general data entry interface) that can enable a user input a meeting title and/or a meeting description, for example, as well transmit a reservation or booking request to the system 100. In one embodiment, it is contemplated that the system 100 will not enable a user to reserve or book one or more resources that are not available to avoid "double booking" the one or more resources. Again, in one embodiment, it is contemplated that the system 100 can also determine the at least one reservation based, at least in part, on at least one voice command (e.g., "Reserve Room 1 for one hour starting at 2:30 p.m. on July 12^{th}"). In one or more embodiments, the system 100 then causes, at least in part, at least one modification of the presentation of the one or more resources based, at least in part, on a determination of the at least one reservation. For example, the system 100 can change the representation of a green conference room to a red conference room during the applicable time period based, at least in part, on the determination of a successful reservation by the system 100.

In one or more embodiments, the system 100 causes, at least in part, a presentation of one or more user representations in the at least one mapping user interface. More specifically, the one or more user representations depict the one or more users within the one level, the plurality of levels, the entirety, or a combination thereof of the at least one indoor environment. By way of example, in one embodiment, the system 100 can determine the one or more locations of the one or more users based, at least in part, on one or more short-range wireless communication technologies and/or networks (e.g., Bluetooth^{®}, BLE, NFC, WiFi, or a combination thereof). In addition, in certain embodiments, the system 100 can determine the one or more locations and/or routes of one or more users based, at least in part, on one or more anonymous media access control (mac) addresses of at least one device (e.g., a mobile phone) associated with the one or more users. In one example use case, a user may want to locate one or more colleagues within an office complex to conduct a meeting (e.g., one or more colleagues that have accepted an invitation from the user to attend the meeting). In response, the system 100 can present the one or more locations of the one or more users in relation to the entire office complex or the system 100 can present the one or more locations in relation to one or more individual floors, respectively. In one embodiment, it is contemplated that by showing the one or more users in relation to the entire building or the entire floor, the system 100 can enable at least one user to better understand how to physically reach the one or more users, especially when the one or more users are located on a different level and/or on multiple floors relative to the at least one user.

In certain embodiments, the system 100 can enable a user to add or select one or more users to become meeting participants, for example, based, at least in part, on their respective locations within the at least one indoor environment (e.g., a location in a room, a seat within a seating arrangement, etc.). More specifically, in one embodiment, the system 100 can determine at least one selection of the one or more users based, at least in part, on a painting or tapping of the room, the user's seat, the user's location, or a combination thereof in the at least one mapping user interface. The system 100 can then update a list of the participants for a meeting based, at least in part, on the user's identification information stored in the at least one resource database 109, for example, so that a user (e.g., a department head) is not required to specifically enter each participant's name for the meeting into the system 100. By way of example, a department head can tap or paint the area of an office that his or her team is located to have the system 100 include the one or more users of the team as meeting participants.

In one embodiment, the system 100 causes, at least in part, the presentation of the one or more resource representations based, at least in part, on the proximity of the one or more resources to the one or more users. By way of example, if at least one user is searching for one or more users in the at least one indoor environment (e.g., user "A" in an office complex), then the system 100 can also cause, at least in part, a presentation of the one or more available resources (e.g., a conference room or a workstation) proximate to user "A" in addition to causing, at least in part, the presentation of the user "A" in the indoor environment. In one embodiment, it is contemplated that if the one or more proximate resources are currently unavailable, the system 100 can enable the at least one user to operate the at least one mapping user interface with a single-point of interaction (e.g., a zooming function) to locate one or more available resources nearby (e.g., down a hall or at another end of a floor).

In one or more embodiments, the system 100 can determine one or more heat maps associated with the one or more users within the at least one indoor environment. For example, the system 100 can determine one or more heat maps or heat spots based, at least in part, on the most reserved one or more resources within the at least one indoor environment (e.g., a conference room in an office complex). In one embodiment, the system 100 can also determine the one or more heat maps or hot routes based, at least in part, on one or more travel patterns associated with the one or more users within the at least one indoor environment (e.g., the most trafficked routes). In one or more embodiments, it is contemplated that the one or more travel patterns can also include one or more routine routes that one or more users take to reach their respective offices in an office complex or places of employment in a shopping mall, for example, so that another user may later determine the best way to find a particular user. In certain embodiments, it is contemplated that the one or more heat maps may be integrated with one or more other building systems (e.g., security systems, lighting systems, etc.). For example, a building owner may want to install more security cameras and/or lighting systems along one or more hot routes to better ensure the safety of the one or more users traveling along those routes.

In one embodiment, the system 100 causes, at least in part, a presentation of the one or more heat maps in the at least one mapping user interface. By way of example, the one or more heat maps may be presented by the system 100 as an additional layer of information similar to the availability information of the one or more resources within the at least one indoor environment. More specifically, the system 100 can present the one or more heat maps as one or more hot routes through the at least one indoor environment (e.g., heavily trafficked routes, routine routes, or a combination thereof) or as one or more hot spots (e.g., the most reserved resource in the whole building, on a particular floor, or a combination thereof). In addition, the system 100 can cause, at least in part, the presentation of the one or more heat maps over a period of time (e.g., a holiday time in a shopping mall) so that one or more users can use the information to make one or more business decisions (e.g., charging rents based on the one or more heat maps).

By way of example, the UEs 101, the positioning platform 103, the applications 107, the at least one resource database 109, the services platform 111, the services 113, the content providers 115 communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

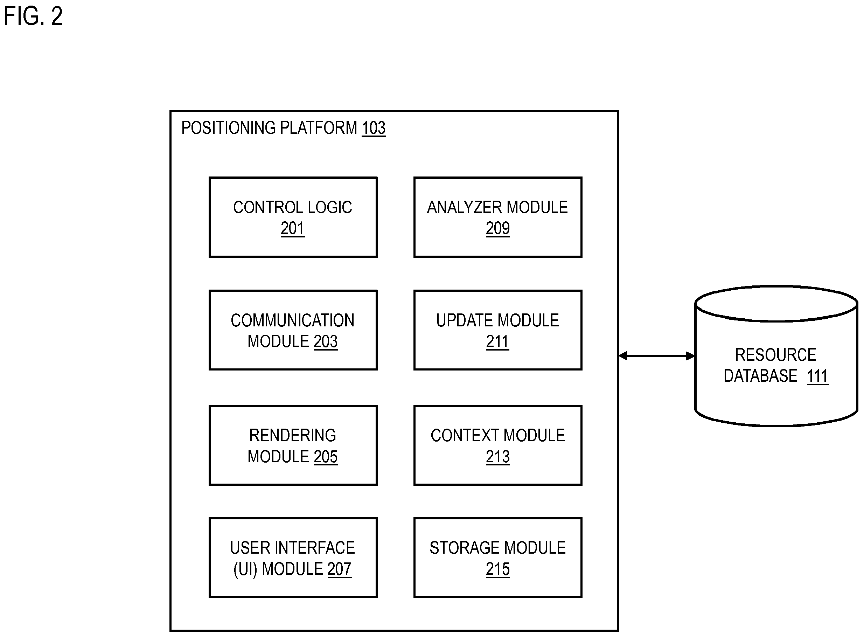

FIG. 2 is a diagram of the components of the positioning platform 103, according to one embodiment. By way of example, the positioning platform 103 includes one or more components for providing a three-dimensional indoor mapping interface that enables users to navigate, explore, and toggle between whole-building and one-level views of various POIs using a single-point of interaction. It is contemplated that the functions of these components may be combined in one or more components or performed by other components of equivalent functionality. In this embodiment, the positioning platform 103 includes a control logic 201, a communication module 203, rendering module 205, a user interface (UI) module 207, an analyzer module 209, an update module 211, a context module 213, and a storage module 215.

The control logic 201 oversees tasks, including tasks performed by the communication module 203, the rendering module 205, the UI module 207, the analyzer module 209, the update module 211, the context module 213, and the storage module 215. For example, although other modules may perform the actual task, the control logic 201 may determine when and how those tasks are performed or otherwise direct the other modules to perform the task.

The communication module 203 in certain embodiments is used for communication between the UEs 101, the positioning platform 103, the applications 107, the at least one resource database 109, the services platform 111, the services 113, and the content providers 115. The communication module 203 also may be used to facilitate one or more short-range wireless communications between the UEs 101. In one embodiment, the communication module 203 may also be used to facilitate the sharing of location information pertaining to the one or more resources, the one or more users, or a combination thereof among the one or more users via short message service (SMS), email, or a combination thereof (e.g., "we are meeting in the conference room next to my current location").

In one embodiment, the rendering module 205 is used to cause, at least in part, a presentation of at least one mapping user interface depicting at least one indoor environment. By way of example, the rendering module 205 can cause, at least in part, a rendering of at least one three-dimensional model of the at least one indoor environment (e.g., an office complex, a shopping mall, an airport, a transit hub, a restaurant, etc.), wherein the mapping interface includes, at least in part, (a) a first view depicting one or more representations of one level of the at least one indoor environment, and (b) a second view depicting one or more other representations of a plurality of levels of the at least one indoor environment, an entirety of the at least one indoor environment, or a combination thereof. More specifically, the rendering module 205 enables a user to toggle back and forth between a whole-building view and a one-level view so that a user can see the relative position of one or more resources, one or more users, or a combination thereof in relation to the entire building and/or in relation to a single floor or level from any number of points of view.

In one embodiment, the rendering module 205 may also be used to cause, at least in part, a presentation of the one or more resource representations in the at least one mapping user interface. For example, the rendering module 205 can depict the one or more resources present within the one level, the plurality of levels, the entirety, or a combination thereof of the at least one indoor environment. More specifically, depending on the computational resources available, for example, the rendering module 205 may render the one or more resource representations based, at least in part, on one or more substantially realistic three-dimensional models, one or more symbolic representations, or a combination thereof. The rendering module 205 also may be used in connection with the context module 213 to cause, at least in part, a presentation of one or more user representations in the at least one mapping user interface. For example, the rendering module 205 may render the one or more users as a blue dot, for example, as a symbol of a user (e.g., an avatar), or a combination thereof. The rendering module 205 may also be used in connection with the context module 213 to cause, at least in part, the presentation of the one or more resource representations based, at least in part, on a proximity to the one or more users. Further, the rendering module 205 also may be used to cause, at least in part, a presentation of the one or more heat maps in the at least one mapping user interface. For example, the rendering module 205 can render the one or more heat maps as one or more hot routes within the at least one indoor environment (e.g., heavily trafficked routes, one or more routine routes, or a combination thereof) or as one or more hot spots (e.g., the most reserved conference room in an office complex, on a particular level or floor, or a combination thereof), etc.

The UI module 207 in certain embodiments is used to provide at least one mode of interaction for operating the at least one mapping user interface, wherein the at least one mode of interaction is based, at least in part, on one or more gestures using a single-point of interaction with a device sensor (e.g., a display screen) including, at least in part, at least one one-thumb gesture, at least one one-finger gesture, or a combination thereof. In particular, the UI module 207 enables a user to perform one or more zooming functions, one or more rotating functions, one or more panning functions, or a combination thereof with a single-point of interaction. In one embodiment, it is contemplated that the UI module 207 also enables a user to perform the one or more functions associated with the one or more gestures based, at least in part, on a dual-point of interaction (e.g., at least one two-finger gesture). In addition, the UI module 207 may also be used to enable the user to perform at least one tilt input associated with at least one device to change the viewing angle of the at least one mapping user interface so that the rendering module 205 can provide a three-dimensional visualization of the at least one indoor environment when the at least one device is not in a horizontal position.

In one or more embodiments, the UI module 207 may also be used to determine at least one reservation of the one or more resources based, at least in part, on the at least one mode of interaction. For example, the UI module 207 can determine the at least one reservation based, at least in part, on a tapping on the one or more resources (e.g., an available conference room), a tapping on one or more interactive interface elements (e.g., a "send request" button), or a combination thereof. Further, the UI module 207 also may be used to determine the availability information for the one or more resources over one or more time periods. For example, the UI module 207 can determine the availability information based, at least in part, on a tapping and/or sliding of one or more interactive interface elements associated with changing a date, a time, a floor, or a combination thereof.

In one embodiment, the analyzer module 209 is used to determine availability information for the one or more resources for the presentation in the at least one mapping user interface. In particular, the analyzer module 209 can determine the availability information based, at least in part, on one or more corresponding data entries in a calendaring application, a spreadsheet application, or a combination thereof associated with the at least one resource database 109, one or more services 113, one or more content providers 115, or a combination thereof. The analyzer module 209 may also be used to determine one or more heat maps associated with the one or more users within the at least one indoor environment. By way of example, the analyzer module 209 may determine the one or more heat maps based, at least in part, on the most reserved one or more resources within the at least one indoor environment. In addition, the analyzer module 209 may also determine the one or more heat maps based, at least in part, on one or more travel patterns associated with the one or more users within the at least one indoor environment (e.g., the most heavily trafficked routes, the most routine routes, or a combination thereof).

In one or more embodiments, the update module 211 is used to cause, at least in part, at least one modification of the presentation of the one or more resource representations based, at least in part, on the at least one reservation. For example, the update module 211 can cause the presentation of the one or more resources to change from green to red, for example, to indicate that a particular resource has been reserved or booked and thereafter back to green once the particular reservation or booking expires. The update module 211 also may be used to change the presentation of the one or more user representations depending on the one or more users changing their respective locations within the at least one indoor environment.

As previously discussed, in one or more embodiments, the context module 213 is used in connection with the rendering module 205 to cause, at least in part, a presentation of one or more user representations in the at least one mapping user interface. In particular, the presentation of the one or more user representations is based, at least in part, on a location of the one or more users within the at least one indoor environment. By way of example, the context module 213 can determine the locations of the one or more users based, at least in part, on one or more short-range wireless communication technologies and/or networks (e.g., Bluetooth^{®}, BLE, NFC, WiFi, or a combination thereof). In certain embodiments, the context module 213 can also determine the one or more locations and/or one or more routes of the one or more users based, at least in part, on one or more anonymous mac addresses of at least one device associated with the one or more users, respectively.

In one embodiment the storage module 215 is used to manage the storage of the one or more three-dimensional models depicting one or more representations of at least one level of an indoor environment, a plurality of levels of the indoor environment, an entirety of the indoor environment, or a combination thereof stored in the at least one resource database 109. In addition, the storage module 215 is used to manage the storage of the one or more listings of one or more resources within the indoor environment, availability information pertaining to the one or more resources (e.g., one or more corresponding data entries in a calendaring application, a spreadsheet application, or a combination thereof), one or more representations of one or more users within the indoor environment, one or more seating arrangements and/or workplace assignments, as well as one or more protocols for generating one or more heat maps based, at least in part, on the one or more users within the at least one indoor environment.

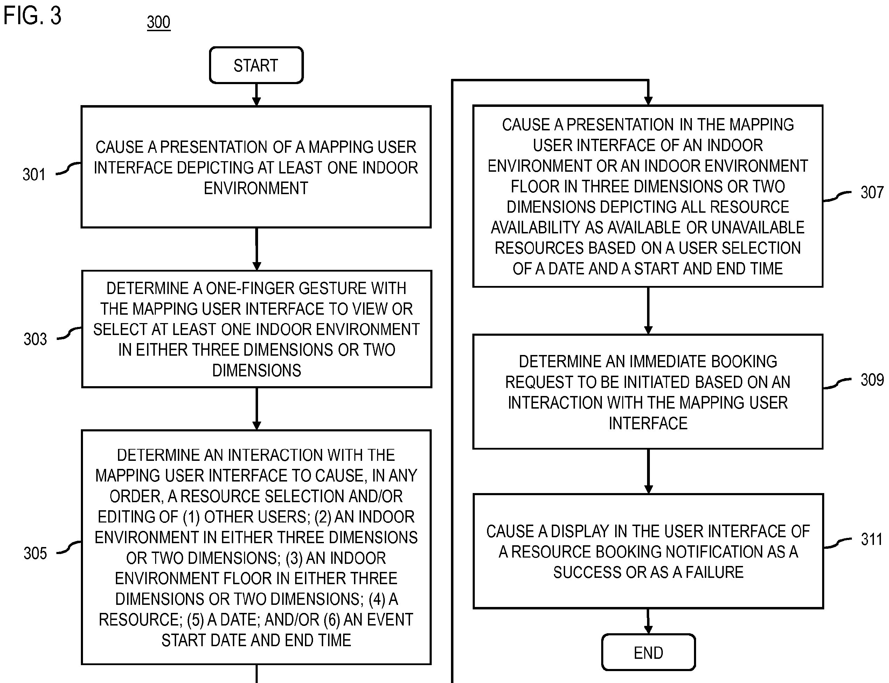

FIG. 3 is a diagram of a work flow for providing a three-dimensional indoor mapping interface that enables users to navigate, explore, and toggle between whole-building and one-level views of various POIs using a single-point of interaction, according to one embodiment. In step 301, the system 100 causes, at least in part, a presentation of at least one mapping user interface depicting at least one indoor environment (e.g., an office complex, a shopping mall, etc.). In step 303, the system 100 determines at least one one-finger gesture with the at least one mapping user interface to view or select at least one indoor environment in either three dimensions (3D) or two dimensions (2D). In step 305, the system 100 determines at least one interaction with the at least one mapping user interface to cause, at least in part, in any order, at least one resource selection and/or editing of (1) one or more other users; (2) at least one indoor environment in either 3D or 2D (e.g., a plurality of levels of the at least one indoor environment, an entirety of the at least one indoor environment, or a combination thereof); (3) at least one floor or level of at least one indoor environment in either 3D or 2D; (4) one or more resources (e.g., a conference room); (5) at least one date; and/or (6) at least one event start and end time (e.g., a start and end time for a department meeting). In step 307, the system 100 causes, at least in part, a presentation in the at least one mapping user interface of at least one indoor environment, at least one floor or level at least one indoor environment, or a combination thereof in 3D or 2D depicting the availability of all of the one or more resources as either available or unavailable resources based, at least in part, on at least one user selection of at least one date and at least one start and end time. In step 309, the system 100 determines at least one immediate booking request to be initiated based, at least in part, on a determination by the system 100 of at least one interaction with the at least one mapping user interface. In step 311, the system 100 causes, at least in part, a display in the user interface of at least one booking notification as a success or as a failure.

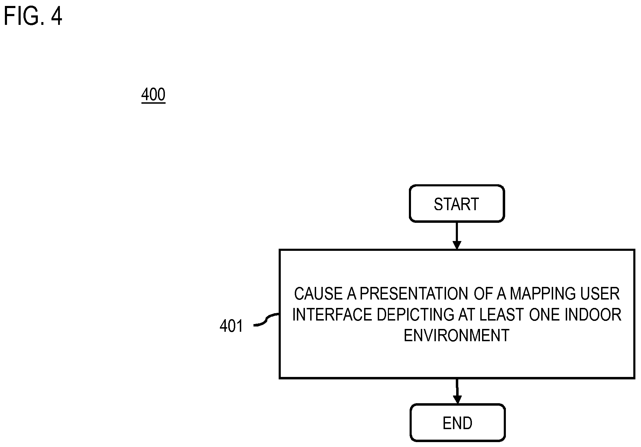

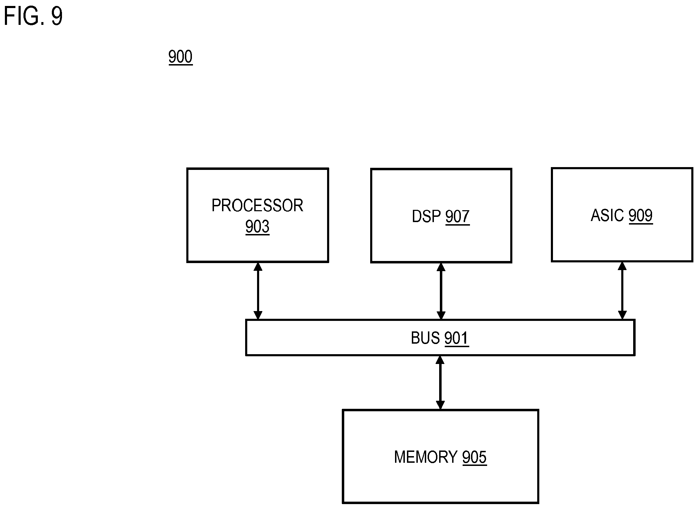

FIGs. 4-6 are flowcharts of processes for providing a three-dimensional indoor mapping interface that enables users to navigate, explore, and toggle between whole-building and one-level views of various POIs using a single-point of interaction, according to one embodiment. In one embodiment, the positioning platform 103 performs the process 400 and is implemented in, for instance, a chip set including a processor and a memory as shown in FIG. 9. In step 401, the positioning platform 103 causes, at least in part, a presentation of at least one mapping user interface depicting at least one indoor environment, wherein the at least one mapping interface includes, at least in part, (a) a first view depicting one or more representations of one level of the at least one indoor environment, and (b) a second view depicting one or more other representations of a plurality of levels of the at least one indoor environment, an entirety of the at least one indoor environment, or a combination thereof. In particular, the presentation of the at least one mapping user interface by the positioning platform 103 includes, at least in part, one or more three-dimensional models of the at least one indoor environment (e.g., a shopping mall, an office complex, an airport, a transit hub, etc.). As a result, the positioning platform 103 enables a user to toggle back and forth between a whole-building view and a one-level view of a three-dimensional model of the at least one indoor environment (e.g., an office complex) so that the user can see the relative position of one or more areas of interest in relation to the entire building and/or in relation to a single floor or level from any number of points of view.

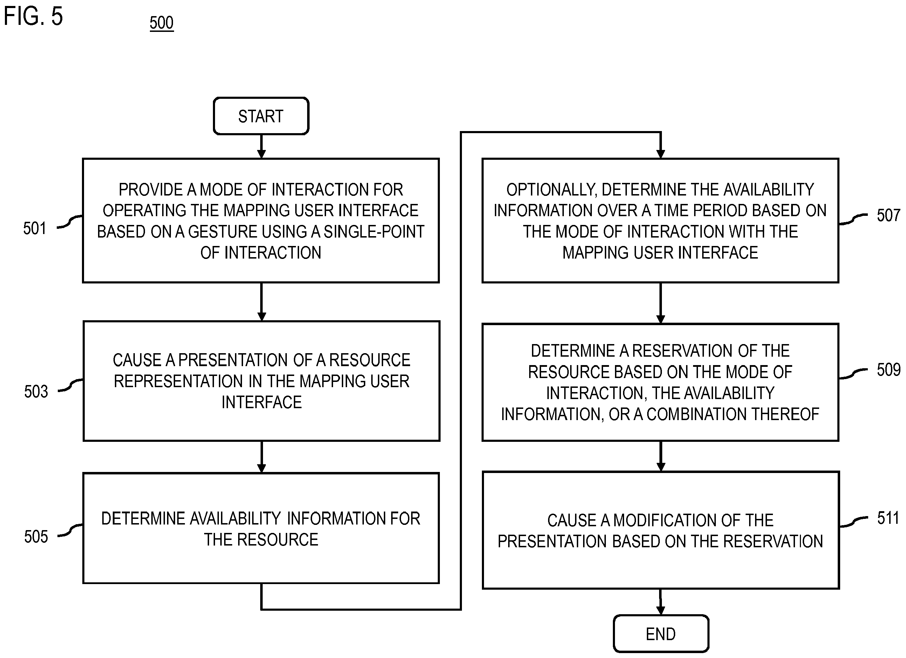

FIG. 5 depicts a process 500 of providing at least one mode of interaction with the at least one mapping user interface and determining one or more resources within the at least one indoor environment. In one embodiment, the positioning platform 103 performs the process 500 and is implemented in, for instance, a chip set including a processor and a memory as shown in FIG. 9. In step 501, the positioning platform 103 provides at least one mode of interaction for operating the at least one mapping user interface, wherein the at least one mode of interaction is based, at least in part, on one or more gestures using a single-point of interaction with a device sensor including, at least in part, at least one one-thumb gesture, at least one one-finger gesture, or a combination thereof. More specifically, the at least one mode of interaction is based, at least in part, on one or more gestures using a single-point of interaction with a device sensor (e.g., a mobile device display screen) including, at least in part, at least one one-thumb gesture, at least one one-finger gesture, or a combination thereof. Moreover, the one or more gestures are associated with one or more zooming functions, one or more rotating functions, one or more panning functions, or a combination thereof. By way of example, the positioning platform 103 can enable a user to zoom out of a map with an upward swipe, zoom into a map with a downward swipe, rotate a map to the left or right with a swipe to the left or right, respectively, and/or pan a map by using a long press and then moving a finger across the device sensor. In one embodiment, the positioning platform 103 may cause, at least in part, a rendering of the initiation, the one or more gestures using a single-point of interaction, or a combination thereof (e.g., as a cursor). In another example use case, it is contemplated that the at least one mode of interaction may also be based, at least in part, on at least one two-finger gesture. Also, in one embodiment, it is contemplated that at least one tilt input of a device (e.g., a mobile phone) associated with the at least one mapping user interface will cause, at least in part, a change of the viewing angle of the interface to enable the positioning platform 103 to present a three-dimensional visualization of the at least one indoor environment when the device is not in a horizontal position. Further, in one or more embodiments, the at least one mapping user interface may include a feedback option wherein a user can provide the positioning platform 103 and/or one or more integrated systems (e.g., a facility maintenance system) substantially up-to-date information (e.g., one or more feedback reports) about the condition of one or more resources (e.g., an untidy conference room, a missing chair, a broken light, etc.). In one embodiment, the feedback report would include the correct location information for the one or more resources automatically. Moreover, in one or more embodiments, if the positioning platform 103 determines multiple feedback reports from the same location and/or pertaining to the same issue, the positioning platform 103 could indicate (even automatically) to one or more facility maintenance system users, for example, an issue that could deserve prioritization to resolve.

In step 503, the positioning platform 103 causes, at least in part, a presentation of one or more resource representations in the at least one mapping user interface, wherein the one or more resource representations depict one or more resources present within the one level, the plurality of levels, the entirety, or a combination thereof of the at least one indoor environment. By way of example, the one or more resources may include any large-scale objects within the at least one indoor environment (e.g., a conference room, a parking space, an office workspace, a restaurant table, large-scale merchandise commonly sold in retail stores, etc.) and the one or more resource representations may be based, at least in part, on one or more substantially realistic three-dimensional models (e.g., a model based on exact dimensions and/or three-dimensional scanning), one or more symbolic representations, or a combination thereof depending on the one or more computational resources, for example, of the mobile device associated with the at least one mapping interface. For example, the positioning platform 103 can cause, at least in part, a presentation of one or more substantially realistic conference rooms within the whole indoor environment (e.g., an office complex) and/or one or more conference rooms located on just one floor based, at least in part, on at least one mode of interaction with the at least one mapping user interface (e.g., a tapping gesture to increase or decrease the number of visible floors of the at least one indoor environment).

In step 505, the positioning platform 103 determines availability information for the one or more resources for the presentation in the at least one mapping user interface. In particular, the positioning platform 103 can determine the availability information based, at least in part, on one or more corresponding data entries in a calendaring application 107, a spreadsheet application 107, or a combination thereof associated with the at least one resource database 109, one or more services 113, one or more content providers 115, or a combination thereof. In certain embodiments, the positioning platform 103 can determine the availability information based, at least in part, on the availability of one or more users that have accepted an invitation, for example, to attend a meeting. By way of example, the positioning platform 103 can present the availability information in the least one mapping user interface based, at least in part, on one or more colors. For example, the positioning platform 103 can present the one or more available resources as green resources, for example, and the one or more unavailable resources as red resources, for example. In one embodiment, it is contemplated that the positioning platform 103 can cause, at least in part, the presentation of the availability information based, at least in part, on one or more levels of specificity. For example, the positioning platform 103 can present the availability information based, at least in part, on how soon or how far away in date and/or time the one or more resources may become available. More specifically, in one example use case, the positioning platform 103 can cause, at least in part, a presentation of the availability information as one or more gradations of green or red, for example, so that a user can determine whether to push back a meeting for 30 minutes, for example, to use a particular conference room or whether to move the proposed meeting to another floor or another building where one or more conference rooms are currently available. In another example use case, the one or more levels of specificity may include at least one measure of suitability (e.g., in terms of space and/or functionality). Further, in one or more embodiments, the positioning platform 103 can cause, at least in part, the presentation of the availability information based, at least in part, on one or more feedback reports and/or information about the condition of the one or more resources (e.g., an untidy conference room, a missing chair, a broken light, etc.). By way of example, whereas the positioning platform 103 can render one or more available resources as green resources, for example, the positioning platform 103 can render one or more currently defective resources as light green or yellow, for example. In particular, the positioning platform 103 can cause, at least in part, the condition information (e.g., one or more fault reports) to be presented to a public user and/or presented only internally (e.g., among one or more facility maintenance system users).

In step 507, the positioning platform 103 optionally determines the availability information for the one or more resources over one or more time periods based, at least in part, on the at least one mode of interaction with the at least one mapping user interface, wherein the one or more time periods include, at least in part, one or more dates, one or more hours of a day, or a combination thereof. More specifically, in one embodiment, it is contemplated that a user can use a single-point interaction to enter a date and/or a time by manipulating one or more interactive interface elements associated with the at least one mapping user interface. For example, the mapping user interface may include, at least in part, left and right arrows to increase or decrease the date, plus and minus symbols to increase or decrease the time, a sliding bar to view a timeline of the availability information, or a combination thereof. More specifically, in one embodiment, the sliding bar may have an area to "grip" (e.g., a white square), which can be moved left or right (i.e., back or ahead in time, respectively). In one embodiment, the positioning platform 103 can represent the length of the grip to correspond to a desired time interval or time slot for the one or more resources (e.g., 15 minutes, 30 minutes, 1 hour, 2 hours, etc.). In one example use case, a user can first select a required time interval (e.g., 15 minutes from a look-up table that appears when a user touches the sliding bar) and then he or she can move the grip along the timeline (e.g., ahead in time). As a result, the positioning platform 103 can present the part of the timeline indicating the amount of time until the reservation of the resource (e.g., a conference room for a meeting) as red or as something different from the presentation of the timeline and grip. In addition, the positioning platform 103 can simultaneously present the availability information of the one or more resources matching the required time interval or time slot in the at least one mapping user interface. As previously discussed, in one embodiment, it is contemplated that the positioning platform 103 can determine the availability information over a period of time based, at least in part, on at least one voice command (e.g., "Is Room 1 available on May 12^{th} at 4:00 p.m.?").

In step 509, the positioning platform 103 determines at least one reservation of the one or more resources based, at least in part, on the at least one mode of interaction, the availability information, or a combination thereof. By way of example, the positioning platform 103 can determine the at least one reservation based, at least in part, on a single-point interaction directly with the one or more resources (e.g., tapping an available conference room), on tapping one or more interactive interface elements (e.g., a "send request" button), or a combination thereof. In one example use case, if the positioning platform 103 determines that a user has selected a particular resource (e.g., based on a tapping gesture), then the system 100 can cause, at least in part, the at least one mapping user interface to switch to another user interface (e.g., a general data entry interface) that can enable a user to mark the location of the resource, share the location of the resource, view the status or capacity of the resource, as well as initiate a request to make a reservation of the resource. The positioning platform 103 can also then cause, at least in part, a presentation of another user interface (e.g., another general data entry interface) that can enable a user to input a meeting title and/or a meeting description, for example, as well as transmit the reservation or booking request to the positioning platform 103. Again, in one embodiment, it is contemplated that the positioning platform 103 can also determine the at least one reservation based, at least in part, on at least one voice command. Then in step 511, the positioning platform 103 causes, at least in part, at least one modification of the presentation of the one or more resources based, at least in part, on the at least one reservation. By way of example, the positioning platform 103 can change the representation of a green conference room to a red conference room during the applicable time period based, at least in part, on the determination of a successful reservation by the positioning platform 103.

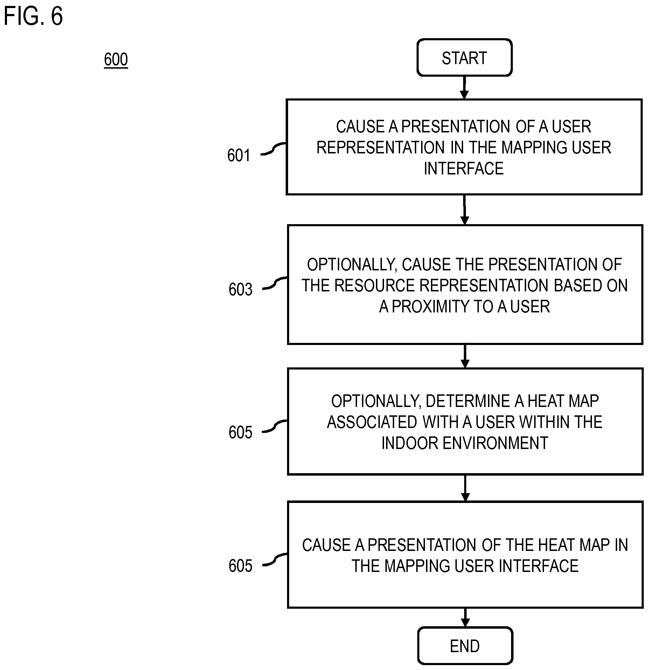

FIG. 6 depicts a process 600 of determining one or more users within the at least one indoor environment and causing, at least in part, one or more representations of the one or more locations of the one or more users. In one embodiment, the positioning platform 103 performs the process 600 and is implemented in, for instance, a chip set including a processor and a memory as shown in FIG. 9. In step 601, the positioning platform 103 causes, at least in part, a presentation of one or more user representations in the at least one mapping user interface, wherein the one or more user representations depict the one or more users within the one level, the plurality of levels, the entirety, or a combination thereof of the at least one indoor environment. By way of example, the positioning platform 103 can determine the one or more locations of the one or more users based, at least in part, on one or more short-range wireless communication technologies and/or networks. Moreover, in certain embodiments, the positioning platform 103 can determine the one or more locations and/or routes of the one or more users based, at least in part, on one or more mac addresses of at least one device associated with the one or more users, respectively. For example, a user may want to locate one or more colleagues within an office complex to conduct a meeting. In response, the positioning platform 103 can present the one or more locations of the one or more users in relation to the entire office complex or the positioning platform 103 can present the one or more locations in relation to the one or more individual floors, respectively.

In certain embodiments, the positioning platform 103 can enable a user to add or select one or more users to become meeting participants, for example, based, at least in part, on their respective locations within the at least one indoor environment (e.g., a location in a room, a seat within seating arrangement, etc.). More specifically, in one embodiment, the positioning platform 103 can determine at least one selection of the one or more users based, at least in part, on a painting or tapping of the room, the user's seat, the user's location, or a combination thereof in the at least one mapping user interface. The positioning platform 103 can then update a list of the participants for a meeting based, at least in part, on the user's identification information stored in the at least one resource database 109, for example, so that a user (e.g., a department head) is not required to specifically enter each participant's name into the positioning platform 103. By way of example, a department head can tap or paint the area of an office that his or team is located to have the positioning platform 103 include the one or more users of the team as meeting participants.

In step 603, the positioning platform 103 optionally causes, at least in part, the presentation of the one or more resource representations based, at least in part, on a proximity to the one or more users. By way of example, if a user is searching for one or more users in the at least one indoor environment (e.g., user "A" in an office complex), then the positioning platform 103 can also cause, at least in part, a presentation of the one or more available resources (e.g., a conference room or a workstation) proximate to user "A" in addition to causing, at least in part, the presentation of the location of user "A" in the indoor environment. In one embodiment, it is contemplated that if the one or more proximate resources are currently unavailable, the positioning platform 103 can enable a user to operate the at least one mapping user interface with a single-point of interaction (e.g., a zooming function) to locate one or more available resources nearby (e.g., down a hall or at another end of a floor).

In step 605, the positioning platform 103 optionally determines one or more heat maps associated with the one or more users within the at least one indoor environment. By way of example, the positioning platform 103 can determine one or more heat maps or heat spots based, at least in part, on the most reserved one or more resources within the at least one indoor environment (e.g., a conference room in an office complex). In one embodiment, the positioning platform 103 can also determine the one or more heat maps or hot routes based, at least in part, on one or more travel patterns associated with the one or more users within the at least one indoor environment (e.g., the most trafficked routes). In one embodiment, it is contemplated that the one or more travel patterns can also include one or more routine routes that the one or more users take to reach their respective offices in an office complex or places of employment in a shopping mall, for example, so that another user may later determine the best way to find a particular user. Then in step 607, the positioning platform 103 causes, at least in part, a presentation of the one or more heat maps in the at least one mapping user interface. By way of example, the one or more heat maps may be presented by the positioning platform 103 as an additional layer of information similar to the availability information of the one or more resources within the at least one indoor environment. In particular, the positioning platform 103 can present the one or more heat maps as one or more hot routes within the at least one indoor environment (e.g., heavily trafficked routes, routine routes, or a combination thereof) or as one or more hot spots (e.g., the most reserved resource in the whole building, on a particular floor, or a combination thereof). Moreover, the positioning platform 103 can cause, at least in part, the presentation of the one or more heat maps over a period of time so that one or more users can use the information to make one or more business decisions (e.g., charging rents based on the one or more heat maps).

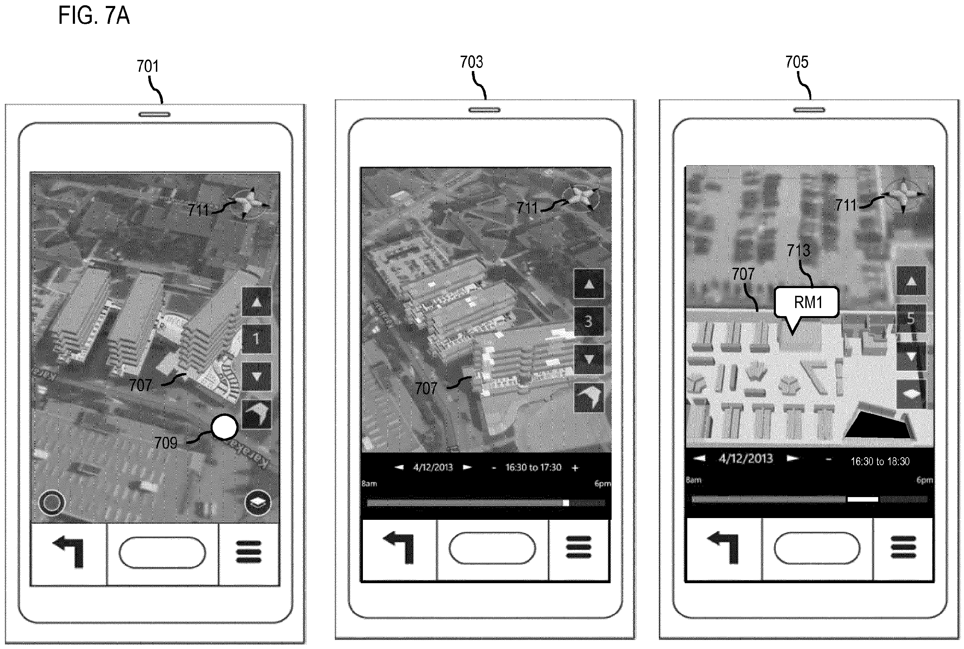

FIGs. 7A-7C are diagrams of user interfaces utilized in the processes of FIGs. 4-6, according to various embodiments. As shown, the example user interfaces of FIGs. 7A-7C include one or more user interface elements and/or functionalities created and/or modified based, at least in part, on information, data, and/or signals resulting from the processes (e.g., processes 400, 500, and 600) described with respect to the FIGs. 4-6. More specifically, FIG. 7A illustrates three user interfaces (e.g., interfaces 701, 703, and 705) depicting a presentation of one or more resource representations in an indoor environment and the reservation or booking of one of those resources.

As previously discussed, in one embodiment, the system 100 causes, at least in part, a presentation of at least one mapping user interface depicting at least one indoor environment as illustrated by the interfaces 701, 703, and 705. In particular, the at least one mapping interface depicts a three-dimensional model 707 of a multi-level multi-building office complex. As shown in interface 705, the at least one mapping interface includes, at least in part, (a) a first view depicting one or more representations of one level of the at least one indoor environment, and (b) a second view depicting one or more other representations of a plurality of levels of the at least one indoor environment, an entirety of the at least one indoor environment, or a combination thereof as shown in interfaces 701 and 703. As a result, the system 100 can enable a user to toggle back and forth between a whole-building view (e.g., as shown in interfaces 701 and 703) and a one-level view (e.g., as shown in interface 705) of the three-dimensional model 707 of the office complex.

In one or more embodiments, the system 100 provides at least one mode of interaction for operating the at least one mapping user interface of interfaces 701, 703, and 705. As previously discussed, the at least one mode of interaction is based, at least in part, on one or more gestures using a single-point of interaction with a device sensor (e.g., the display screen of interfaces 701, 703, and 705) including, at least in part, at least one one-thumb gesture, at least one one-finger gesture, or a combination thereof. In one embodiment, the system 100 may cause, at least in part, a rendering of the initiation, the one or more gestures using a single-point of interaction, or a combination thereof as depicted by the cursor 709, for example. More specifically, the one or more gestures are associated with one or more zooming functions, one or more rotating functions, one or more panning functions, or a combination thereof as depicted by the corresponding compass symbol 711. By way of example, the system 100 enables a user to zoom out of the mapping user interface of interfaces 701, 703, and 705 with an upward swipe, zoom into the map with a downward swipe, rotate the map left or right with a swipe to the right or left, respectively, and/or pan the map by using a long press and moving a finger across the map and/or the device sensor. As previously discussed, in one embodiment, it is contemplated that the at least one mode of interaction may also be based, at least in part, on at least one two-finger gesture and/or at least one tilt input of the interfaces 701, 703, and/or 705.

In one embodiment, the system 100 causes, at least in part, a presentation of one or more resource representations in the at least one mapping interface of interfaces 701, 703, and 705 (e.g., one or more conference rooms identified by the white or grey shaded squares within the three-dimensional model 707 of interfaces 703 and 705), wherein the one or more resource representations depict one or more resources (e.g., the one or more conference rooms) present within the one level as shown in the three-dimensional model 707 of interface 705, a plurality of levels, the entirety, or a combination thereof of the multi-level office complex as shown in three-dimensional model 707 of interface 703. In this example use case, the one or more resources are, in fact, conference rooms. Moreover, the system 100 can cause, at least in part, the presentation of the one or more resources based, at least in part, on one or more substantially realistic three-dimensional models, one or more symbolic representations, or a combination thereof depending on the one or more computational resources, for example, associated with the interfaces 701, 703, and 705.

In one or more embodiments, the system 100 determines availability information for the one or more resources for the presentation in the at least one mapping user interface of interfaces 701, 703, and 705. More specifically, the system 100 can determine the availability information at the date and time based, at least in part, on one or more corresponding data entries in a calendaring application 107, a spreadsheet application 107, or a combination thereof associated with the at least one resource database 109, one or more services 113, one or more content providers 115, or a combination thereof. In this example use case, a user is interested to determine when one or more conference rooms may be available in the afternoon of April 12, 2013 (e.g., between 16:30 and 17:30). As shown in interface 703, it appears that a number of conference rooms are available at this date and time as depicted by the white coloring of the conference rooms. However, upon closer inspection and/or manipulation of the at least one mapping user interface of interface 705, at least one conference room is not available at this time as depicted by the black coloring of the conference room.

In one embodiment, the system 100 can determine the availability information for the one or more resources (e.g., one or more conference rooms) over a one or more time periods based, at least in part, on a single-point of interaction with the at least one mapping user interface of interfaces 703 and 705. In particular, the one or more time periods include, at least in part, one or more dates, one or more times, or a combination thereof. In one embodiment, it is contemplated that a user can use a single-point interaction to enter a date and/or a time by manipulating one or more interactive interface elements as depicted by the interactive left and right interface arrows associated with the date and the interactive plus and minus interface symbols associated with the time as depicted in interfaces 703 and 705. In one embodiment, the one or more interactive interface elements may also include a sliding bar as shown directly below the date and time interface buttons in interfaces 703 and 705. In particular, the sliding bar may have an area to "grip" (e.g., a white square), which can be moved left or right (i.e., back or ahead in time, respectively). In one embodiment, the system 100 can represent the length of the grip to correspond to a desired time interval or time slot for the one or more resources (e.g., 15 minutes, 30 minutes, 1 hour, 2 hours, etc.) and the system 100 can represent the part of the timeline indicating the amount of time until the reservation of the resource (e.g., a conference room for a meeting) as red or as something different from the presentation of the timeline and/or grip (e.g., as shown in interfaces 701 and 703). By way of example, the grip in interface 703 may represent a 1 hour interval whereas the grip in interface 705 may represented a 2 hour interval.

In one embodiment, the system 100 determines at least one reservation of the one or more resources based, at least in part, on the at least one mode of interaction, the availability information, or a combination thereof. For example, the user has selected "RM1" as shown by the dialogue bubble 713 identifying the particular resource. By way of example, the system 100 can determine the at least one reservation based, at least in part, on a single-point of interaction directly with RM1 conference room (e.g., tapping the conference room). As previously discussed, in one or more embodiments, if the system 100 determines that a user has selected a particular resource (e.g., RM1), the system 100 can cause, at least in part, the at least one mapping user interface of interfaces 701, 703, and 705 to switch to another user interface (e.g., a general data entry interface) (not shown for illustrative convenience) that can enable a user to mark the location of the resource, share the location of the resource, view the status or capacity of the resource, as well as initiate a request to make a reservation of the resource. In addition, the system 100 can also then cause, at least in part, a presentation of another user interface (e.g., another general data entry interface) (also not shown for illustrative convenience) that can enable a user to input a meeting title and/or a meeting description, for example, as well as transmit the reservation or booking request to the system 100. As also previously discussed, in one embodiment, it is contemplated that the system 100 can also determine the at least one reservation based, at least in part, on a user speaking into the interface 705, for example.

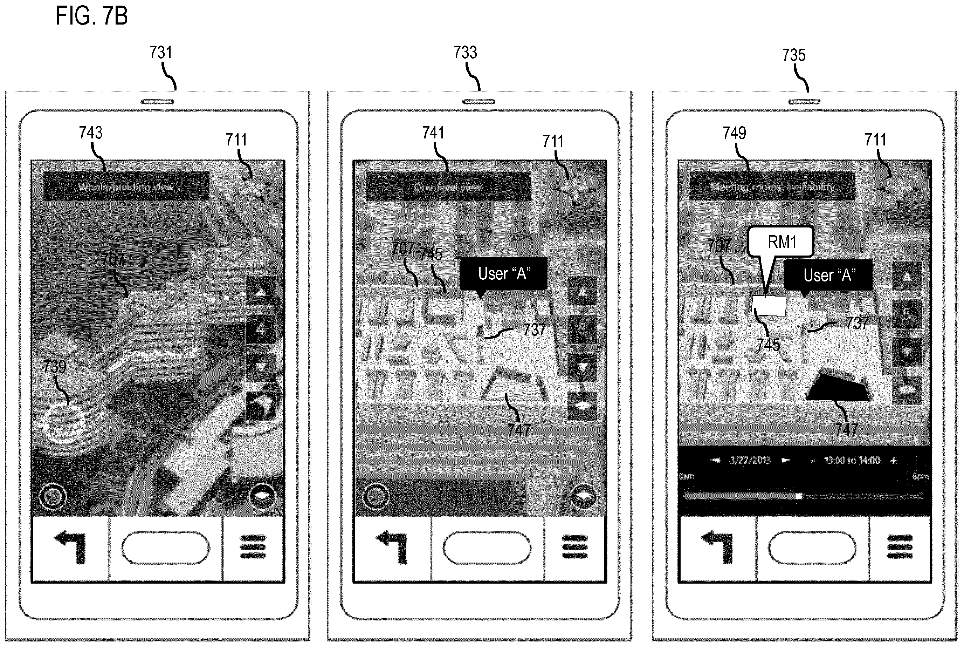

FIG. 7B illustrates three user interfaces (e.g., interfaces 731, 733, and 735) depicting a determination of one or more users within the multi-level office complex of FIG. 7A. In one example use case, a user (e.g., user "Z") wants to locate one or more colleagues (e.g., user "A") within the multi-level office complex to conduct a meeting. In one embodiment, the system 100 can enable the user "Z" to enter the name of the one or more users (e.g., user "A") in a search-based interface (not shown for illustrative convenience). In response, in one embodiment, the system 100 causes, at least in part, a presentation of one or more user representations in the at least one mapping user interface of interfaces of 731, 733, and 735 as depicted by the user symbols 737 and 739 representing user "A". More specifically, interfaces 733 and 735 depict user "A" within one level as depicted by the notification 741 ("One-level view") and interface 731 depicts user "A" in a plurality of levels, an entirety, or a combination thereof of the multi-level office complex as depicted by the notification 743 ("Whole-building view"). In the whole-building view, where the location of user "A" is not readily apparent, the system 100 can cause, at least in part, a presentation of a symbol (e.g., the pulsating dot 739) indicating the out of view location of the user "A" so that the user "Z" could use the symbol as a point of reference to manipulate the mapping user interface of interface 731, for example, to better locate the user "A". As previously discussed, in one embodiment, the system 100 can determine the one or more locations of user "A" based, at least in part, on one or more short-range wireless communication technologies and/or networks (e.g., Bluetooth^{®}, BLE, NFC, WiFi, or a combination thereof). In addition, in certain embodiments, the system 100 can determine the one or more locations and/or routes of the one or more users (e.g., user "A") based, at least in part, on one or more mac addresses of at least one device (e.g., a mobile phone) associated with user "A".

In one embodiment, the system 100 causes, at least in part, the presentation of one or more resource representations (e.g., the two conference rooms 745 and 747 of interfaces 733 and 735) based, at least in part, on a proximity of the one or more resources to the one or more users (e.g., user "A"). By way of example, if the user "Z" is searching for the user "A" in the office complex, then the system 100 can also cause, at least in part, a presentation of the one or more available resources (e.g., a conference room or a workstation) proximate to the user "A" as depicted by the notification 749 of interface 735 in addition to causing, at least in part, the presentation of the user "A" in the three-dimensional model 707 as depicted in interface 735. Once the system 100 presents the one or more proximate resources, the user "Z" is able to reserve the one or more available resources (e.g., RMl) as discussed with respect to interface 705 of FIG. 7A. In one embodiment, it is contemplated that if the one or more proximate resources are currently unavailable (e.g., conference room 747), the system 100 can enable a user to operate the at least one mapping user interface of interface 735 with a single-point of interaction (e.g., a zooming function) to locate one or more available resources nearby (e.g., down the hall or at another end of a floor).

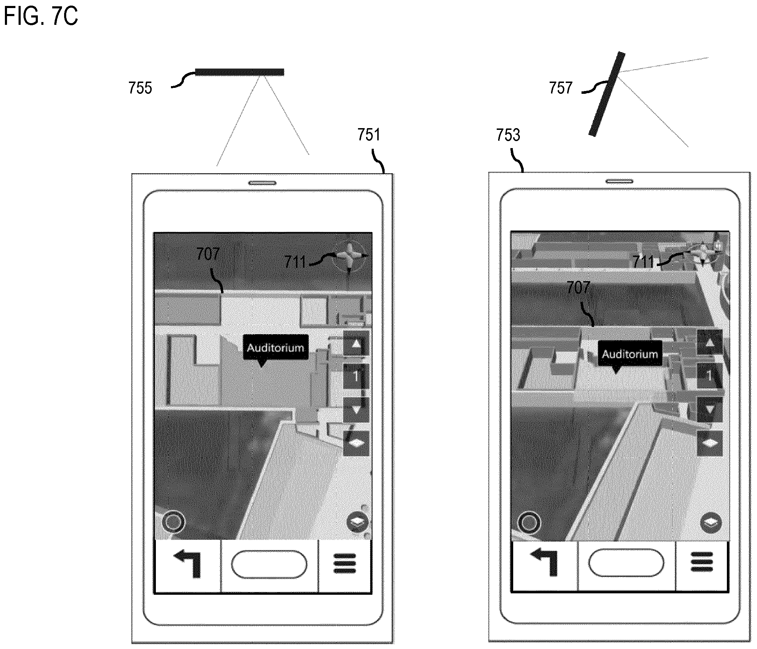

FIG. 7C illustrates two user interfaces (e.g., interfaces 751 and 753) depicting a change of the viewing angle of the interface to enable the system 100 to present a three-dimensional visualization of the at least one indoor environment when the device is not in a horizontal position. More specifically, in one embodiment, when the system 100 determines that the at least one interface 751 is in a horizontal position as depicted by the representative symbol 755 and the angle of the compass symbol 711, the system 100 can present a bird's-eye-view or a mostly 2D view of the three-dimensional model 707. However, when the system 100 determines one or more tilt inputs associated with the at least one interface 753 as depicted by the representative symbol 757 and the angle of the compass symbol 711, then the system 100 can present one or more three-dimensional visualizations of the at least one indoor environment as depicted by the three-dimensional model 707. In particular, in one embodiment, it is contemplated that the system 100 can present a change of the visualization in substantially real-time to correspond with the angle of the at least one mapping user interface (e.g., interface 753).

The processes described herein for providing a three-dimensional indoor mapping interface that enables users to navigate, explore, and toggle between whole-building and one-level views of various POIs using a single-point of interaction may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

FIG. 8 illustrates a computer system 800 upon which an embodiment of the invention may be implemented. Although computer system 800 is depicted with respect to a particular device or equipment, it is contemplated that other devices or equipment (e.g., network elements, servers, etc.) within FIG. 8 can deploy the illustrated hardware and components of system 800. Computer system 800 is programmed (e.g., via computer program code or instructions) to provide a three-dimensional indoor mapping interface that enables users to navigate, explore, and toggle between whole-building and one-level views of various POIs using a single-point of interaction as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 800, or a portion thereof, constitutes a means for performing one or more steps of providing a three-dimensional indoor mapping interface that enables users to navigate, explore, and toggle between whole-building and one-level views of various POIs using a single-point of interaction.

A bus 810 includes one or more parallel conductors of information so that information is transferred quickly among devices coupled to the bus 810. One or more processors 802 for processing information are coupled with the bus 810.

A processor (or multiple processors) 802 performs a set of operations on information as specified by computer program code related to provide a three-dimensional indoor mapping interface that enables users to navigate, explore, and toggle between whole-building and one-level views of various POIs using a single-point of interaction. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 800 also includes a memory 804 coupled to bus 810. The memory 804, such as a random access memory (RAM) or any other dynamic storage device, stores information including processor instructions for providing a three-dimensional indoor mapping interface that enables users to navigate, explore, and toggle between whole-building and one-level views of various POIs using a single-point of interaction. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or any other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for providing a three-dimensional indoor mapping interface that enables users to navigate, explore, and toggle between whole-building and one-level views of various POIs using a single-point of interaction, is provided to the bus 810 for use by the processor from an external input device 812, such as a keyboard containing alphanumeric keys operated by a human user, a microphone, an Infrared (IR) remote control, a joystick, a game pad, a stylus pen, a touch screen, or a sensor. A sensor detects conditions in its vicinity and transforms those detections into physical expression compatible with the measurable phenomenon used to represent information in computer system 800. Other external devices coupled to bus 810, used primarily for interacting with humans, include a display device 814, such as a cathode ray tube (CRT), a liquid crystal display (LCD), a light emitting diode (LED) display, an organic LED (OLED) display, a plasma screen, or a printer for presenting text or images, and a pointing device 816, such as a mouse, a trackball, cursor direction keys, or a motion sensor, for controlling a position of a small cursor image presented on the display 814 and issuing commands associated with graphical elements presented on the display 814. In some embodiments, for example, in embodiments in which the computer system 800 performs all functions automatically without human input, one or more of external input device 812, display device 814 and pointing device 816 is omitted.

In the illustrated embodiment, special purpose hardware, such as an application specific integrated circuit (ASIC) 820, is coupled to bus 810. The special purpose hardware is configured to perform operations not performed by processor 802 quickly enough for special purposes. Examples of ASICs include graphics accelerator cards for generating images for display 814, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 800 also includes one or more instances of a communications interface 870 coupled to bus 810. Communication interface 870 provides a one-way or two-way communication coupling to a variety of external devices that operate with their own processors, such as printers, scanners and external disks. In general the coupling is with a network link 878 that is connected to a local network 880 to which a variety of external devices with their own processors are connected. For example, communication interface 870 may be a parallel port or a serial port or a universal serial bus (USB) port on a personal computer. In some embodiments, communications interface 870 is an integrated services digital network (ISDN) card or a digital subscriber line (DSL) card or a telephone modem that provides an information communication connection to a corresponding type of telephone line. In some embodiments, a communication interface 870 is a cable modem that converts signals on bus 810 into signals for a communication connection over a coaxial cable or into optical signals for a communication connection over a fiber optic cable. As another example, communications interface 870 may be a local area network (LAN) card to provide a data communication connection to a compatible LAN, such as Ethernet. Wireless links may also be implemented. For wireless links, the communications interface 870 sends or receives or both sends and receives electrical, acoustic or electromagnetic signals, including infrared and optical signals, that carry information streams, such as digital data. For example, in wireless handheld devices, such as mobile telephones like cell phones, the communications interface 870 includes a radio band electromagnetic transmitter and receiver called a radio transceiver. In certain embodiments, the communications interface 870 enables connection to the communication network 105 for providing a three-dimensional indoor mapping interface that enables users to navigate, explore, and toggle between whole-building and one-level views of various POIs using a single-point of interaction to the UEs 101.

The term "computer-readable medium" as used herein refers to any medium that participates in providing information to processor 802, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 808. Volatile media include, for example, dynamic memory 804. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 820.

Network link 878 typically provides information communication using transmission media through one or more networks to other devices that use or process the information. For example, network link 878 may provide a connection through local network 880 to a host computer 882 or to equipment 884 operated by an Internet Service Provider (ISP). ISP equipment 884 in turn provides data communication services through the public, world-wide packet-switching communication network of networks now commonly referred to as the Internet 890.

A computer called a server host 892 connected to the Internet hosts a process that provides a service in response to information received over the Internet. For example, server host 892 hosts a process that provides information representing video data for presentation at display 814. It is contemplated that the components of system 800 can be deployed in various configurations within other computer systems, e.g., host 882 and server 892.

At least some embodiments of the invention are related to the use of computer system 800 for implementing some or all of the techniques described herein. According to one embodiment of the invention, those techniques are performed by computer system 800 in response to processor 802 executing one or more sequences of one or more processor instructions contained in memory 804. Such instructions, also called computer instructions, software and program code, may be read into memory 804 from another computer-readable medium such as storage device 808 or network link 878. Execution of the sequences of instructions contained in memory 804 causes processor 802 to perform one or more of the method steps described herein. In alternative embodiments, hardware, such as ASIC 820, may be used in place of or in combination with software to implement the invention. Thus, embodiments of the invention are not limited to any specific combination of hardware and software, unless otherwise explicitly stated herein.

The signals transmitted over network link 878 and other networks through communications interface 870, carry information to and from computer system 800. Computer system 800 can send and receive information, including program code, through the networks 880, 890 among others, through network link 878 and communications interface 870. In an example using the Internet 890, a server host 892 transmits program code for a particular application, requested by a message sent from computer 800, through Internet 890, ISP equipment 884, local network 880 and communications interface 870. The received code may be executed by processor 802 as it is received, or may be stored in memory 804 or in storage device 808 or any other non-volatile storage for later execution, or both. In this manner, computer system 800 may obtain application program code in the form of signals on a carrier wave.

Various forms of computer readable media may be involved in carrying one or more sequence of instructions or data or both to processor 802 for execution. For example, instructions and data may initially be carried on a magnetic disk of a remote computer such as host 882. The remote computer loads the instructions and data into its dynamic memory and sends the instructions and data over a telephone line using a modem. A modem local to the computer system 800 receives the instructions and data on a telephone line and uses an infra-red transmitter to convert the instructions and data to a signal on an infra-red carrier wave serving as the network link 878. An infrared detector serving as communications interface 870 receives the instructions and data carried in the infrared signal and places information representing the instructions and data onto bus 810. Bus 810 carries the information to memory 804 from which processor 802 retrieves and executes the instructions using some of the data sent with the instructions. The instructions and data received in memory 804 may optionally be stored on storage device 808, either before or after execution by the processor 802.

FIG. 9 illustrates a chip set or chip 900 upon which an embodiment of the invention may be implemented. Chip set 900 is programmed to provide a three-dimensional indoor mapping interface that enables users to navigate, explore, and toggle between whole-building and one-level views of various POIs using a single-point of interaction as described herein and includes, for instance, the processor and memory components described with respect to FIG. 8 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 900 can be implemented in a single chip. It is further contemplated that in certain embodiments the chip set or chip 900 can be implemented as a single "system on a chip." It is further contemplated that in certain embodiments a separate ASIC would not be used, for example, and that all relevant functions as disclosed herein would be performed by a processor or processors. Chip set or chip 900, or a portion thereof, constitutes a means for performing one or more steps of providing user interface navigation information associated with the availability of functions. Chip set or chip 900, or a portion thereof, constitutes a means for performing one or more steps of providing a three-dimensional indoor mapping interface that enables users to navigate, explore, and toggle between whole-building and one-level views of various POIs using a single-point of interaction.

In one embodiment, the chip set or chip 900 includes a communication mechanism such as a bus 901 for passing information among the components of the chip set 900. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a more general purpose processor. Other specialized components to aid in performing the inventive functions described herein may include one or more field programmable gate arrays (FPGA), one or more controllers, or one or more other special-purpose computer chips.

In one embodiment, the chip set or chip 900 includes merely one or more processors and some software and/or firmware supporting and/or relating to and/or for the one or more processors.

The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to provide a three-dimensional indoor mapping interface that enables users to navigate, explore, and toggle between whole-building and one-level views of various POIs using a single-point of interaction. The memory 905 also stores the data associated with or generated by the execution of the inventive steps.

FIG. 10 is a diagram of exemplary components of a mobile device (e.g., mobile terminal, mobile phone, handset, etc.) for communications, which is capable of operating in the system of FIG. 1, according to one embodiment. In some embodiments, mobile terminal 1001, or a portion thereof, constitutes a means for performing one or more steps of providing a three-dimensional indoor mapping interface that enables users to navigate, explore, and toggle between whole-building and one-level views of various POIs using a single-point of interaction. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 1003, a Digital Signal Processor (DSP) 1005, and a receiver/transmitter unit including a microphone gain control unit and a speaker gain control unit. A main display unit 1007 provides a display to the user in support of various applications and mobile terminal functions that perform or support the steps of providing a three-dimensional indoor mapping interface that enables users to navigate, explore, and toggle between whole-building and one-level views of various POIs using a single-point of interaction. The display 1007 includes display circuitry configured to display at least a portion of a user interface of the mobile terminal (e.g., mobile telephone). Additionally, the display 1007 and display circuitry are configured to facilitate user control of at least some functions of the mobile terminal. An audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station, which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, a user of mobile terminal 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 1025 for compensation of any frequency-dependent impairments that occur during transmission though the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an up-converter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003 which can be implemented as a Central Processing Unit (CPU).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile terminal 1001 to provide a three-dimensional indoor mapping interface that enables users to navigate, explore, and toggle between whole-building and one-level views of various POIs using a single-point of interaction. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the terminal. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile terminal 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable storage medium known in the art. The memory device 1051 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 1049 carries, for instance, important information, such as the cellular phone number, the carrier supplying service, subscription details, and security information. The SIM card 1049 serves primarily to identify the mobile terminal 1001 on a radio network. The card 1049 also contains a memory for storing a personal telephone number registry, text messages, and user specific mobile terminal settings.

## Claims

1. A computer-implemented method comprising:
causing a presentation (401) of a mapping user interface (701, 703, 705) depicting a three-dimensional model of an indoor environment, wherein the mapping user interface includes
(a) a first view (705, 733, 735) depicting one or more representations of one level of a plurality of levels of the indoor environment, and
(b) a second view (701, 703, 732) depicting one or more other representations of the plurality of levels of the indoor environment, an entirety of the indoor environment, or a combination thereof;
causing a presentation (601) of one or more user representations (737, 739) in the mapping user interface, wherein the one or more user representations depict the locations of one or more users within the one level of the indoor environment in the first view and within the plurality of levels of the indoor environment, the entirety of the indoor environment or the combination thereof in the second view;
determining (506) availability information for one or more resources present within the one level, the plurality of levels, the entirety, or a combination thereof of the indoor environment; and
causing a presentation (503) of one or more resource representations (745, 747) in the mapping user interface (701, 703, 705), wherein the one or more resource representations depict the one or more resources, and wherein causing a presentation of one or more resource representations includes causing a presentation of the availability information for the one or more resources based on one or more levels of specificity; and
causing a toggle operation between the first view and the second view.

2. The method of claim 1, further comprising:
providing (501) at least one mode of interaction for operating the mapping user interface (701, 703, 705),
wherein the at least one mode of interaction is based on one or more gestures using a single-point of interaction with a device sensor (812) including at least one one-thumb gesture, at least one one-finger gesture, or a combination thereof.

3. The method of claim 2, wherein the one or more gestures are associated with one or more zooming functions, one or more rotating functions, one or more panning functions, or a combination thereof.

4. The method of claim 1, wherein the one or more levels of specificity includes one or more of:
how soon or how far away in time the one or more resources may become available;
how soon or how far away in date the one or more resources may become available;
a measure of suitability in terms of space;
a measure of suitability in terms of functionality; and
a feedback report and//or information about the condition of the one or more resources.

5. The method of claim 1, wherein a presentation of the availability information for the one or more resources comprises a presentation of the one or more resource representations in respective colours which depend on the availability information for the respective resource.

6. The method according to claim 2, further comprising:
determining (509) at least one reservation of the one or more resources based on the at least one mode of interaction, the availability information, or a combination thereof; and
causing (511) at least one modification of the presentation based on the at least one reservation.

7. The method according to any of claims 1-6, further comprising:
determining a current location of the one or more users within the indoor environment based on short-range wireless communication signals transmitted by mobile user devices of the users, and
wherein the presentation of the one of more user representations is based on the determined current locations for the one or more users.

8. The method according to claim 1, further comprising:
causing (603) the presentation of the one or more resource representations based on a proximity to the one or more users.

9. The method according to any of claim 1, further comprising:
determining (605) one or more heat maps associated with the one or more users within the indoor environment; and
causing (605) a presentation of the one or more heat maps in the mapping user interface (701, 703, 705).

10. The method according to claim 1, further comprising:
determining (507) the availability information for the one or more resources over one or more time periods based on the at least one mode of interaction with the mapping user interface (701, 703, 705),
wherein the one or more time periods include one or more dates, one or more hours of a day, or a combination thereof.

11. A computer-readable storage medium carrying one or more sequences of one or more instructions which, when executed by one or more processors, cause an apparatus to perform at least a method of any of claims 1-10.

12. An apparatus comprising means for performing the method of any of claims 1-10.

13. The apparatus of claim 12, wherein the apparatus is a mobile phone (1001) further comprising:
user interface circuitry (1047, 1003) and user interface software configured to facilitate user control of at least some functions of the mobile phone through use of a display and configured to respond to user input; and
a display and display circuitry configured to display at least a portion of a user interface of the mobile phone, the display and display circuitry configured to facilitate user control of at least some functions of the mobile phone.

## Patentansprüche

1. Computerimplementiertes Verfahren, das Folgendes umfasst:
Veranlassen einer Präsentation (401) einer Abbildungsbenutzeroberfläche (701, 703, 705), die ein dreidimensionales Modell einer Innenumgebung wiedergibt, wobei die Abbildungsbenutzeroberfläche Folgendes beinhaltet:
(a) eine erste Ansicht (705, 733, 735), die eine oder mehrere Darstellungen einer Ebene mehrerer Ebenen der Innenumgebung wiedergibt, und
(b) eine zweite Ansicht (701, 703, 732), die eine oder mehrere andere Darstellungen der mehreren Ebenen der Innenumgebung, eine Gesamtheit der Innenumgebung oder eine Kombination davon wiedergibt;
Veranlassen einer Präsentation (601) einer oder mehrerer Benutzerdarstellungen (737, 739) in der Abbildungsbenutzeroberfläche, wobei die eine oder die mehreren Benutzerdarstellungen die Standorte eines oder mehrerer Benutzer innerhalb der einen Ebene der Innenumgebung in der ersten Ansicht und innerhalb der mehreren Ebenen der Innenumgebung, der Gesamtheit der Innenumgebung oder der Kombination davon in der zweiten Ansicht wiedergeben;
Bestimmen (506) von Verfügbarkeitsinformationen für eine oder mehrere Ressourcen, die innerhalb der einen Ebene, der mehreren Ebenen, der Gesamtheit oder einer Kombination davon der Innenumgebung vorhanden sind; und
Veranlassen einer Präsentation (503) einer oder mehrerer Ressourcendarstellungen (745, 747) in der Abbildungsbenutzeroberfläche (701, 703, 705), wobei die eine oder die mehreren Ressourcendarstellungen die eine oder die mehreren Ressourcen wiedergeben und wobei das Veranlassen einer Präsentation einer oder mehrerer Ressourcendarstellungen das Veranlassen einer Präsentation der Verfügbarkeitsinformationen für die eine oder die mehreren Ressourcen basierend auf einer oder mehreren Spezifitätsebenen beinhaltet; und
Veranlassen eines Umschaltvorgangs zwischen der ersten Ansicht und der zweiten Ansicht.

2. Verfahren nach Anspruch 1, das ferner Folgendes umfasst:
Bereitstellen (501) wenigstens eines Interaktionsmodus zum Betreiben der Abbildungsbenutzeroberfläche (701, 703, 705),
wobei der wenigstens eine Interaktionsmodus auf einer oder mehreren Gesten basiert, die einen Einzelpunkt einer Interaktion mit einem Vorrichtungssensor (812) verwenden, die wenigstens eine Ein-Daumen-Geste, wenigstens eine Ein-Finger-Geste oder eine Kombination davon beinhalten.

3. Verfahren nach Anspruch 2, wobei die eine oder mehreren Gesten einer oder mehreren Zoomfunktionen, einer oder mehreren Drehfunktionen, einer oder mehreren Schwenkfunktionen oder einer Kombination davon zugehörig sind.

4. Verfahren nach Anspruch 1, wobei die eine oder die mehreren Spezifitätsebenen Folgendes beinhalten:
wie bald oder nach welcher Zeit die eine oder die mehreren Ressourcen verfügbar werden können;
wie bald oder ab welchem Datum die eine oder die mehreren Ressourcen verfügbar werden können;
ein Maß einer Eignung bezüglich eines Raums;
ein Maß einer Eignung bezüglich einer Funktionalität; und/oder
einen Rückmeldungsbericht und/oder Informationen über den Zustand der einen oder der mehreren Ressourcen.

5. Verfahren nach Anspruch 1, wobei eine Präsentation der Verfügbarkeitsinformationen für die eine oder die mehreren Ressourcen eine Präsentation der einen oder mehreren Ressourcendarstellungen in jeweiligen Farben umfasst, die von den Verfügbarkeitsinformationen für die jeweilige Ressource abhängen.

6. Verfahren nach Anspruch 2, das ferner Folgendes umfasst:
Bestimmen (509) wenigstens einer Reservierung der einen oder der mehreren Ressourcen basierend auf dem wenigstens einen Interaktionsmodus, den Verfügbarkeitsinformationen oder einer Kombination davon; und
Veranlassen (511) wenigstens einer Modifikation der Präsentation basierend auf der wenigstens einen Reservierung.

7. Verfahren nach einem der Ansprüche 1-6, das ferner Folgendes umfasst:
Bestimmen eines aktuellen Standorts des einen oder der mehreren Benutzer innerhalb der Innenumgebung basierend auf Drahtloskommunikationssignalen kurzer Reichweite, die durch mobile Benutzervorrichtungen der Benutzer übertragen werden, und
wobei die Präsentation der einen oder der mehreren Benutzerdarstellungen auf den bestimmten aktuellen Standorten für den einen oder die mehreren Benutzer basiert.

8. Verfahren nach Anspruch 1, das ferner Folgendes umfasst:
Veranlassen (603) der Präsentation der einen oder mehreren Ressourcendarstellungen basierend auf einer Nähe zu dem einen oder den mehreren Benutzern.

9. Verfahren nach Anspruch 1, das ferner Folgendes umfasst:
Bestimmen (605) einer oder mehrerer Wärmeabbildungen, die dem einen oder den mehreren Benutzern innerhalb der Innenumgebung zugehörig sind; und
Veranlassen (605) einer Präsentation der einen oder der mehreren Wärmeabbildungen in der Abbildungsbenutzeroberfläche (701, 703, 705).

10. Verfahren nach Anspruch 1, das ferner Folgendes umfasst:
Bestimmen (507) der Verfügbarkeitsinformationen für die eine oder die mehreren Ressourcen über einen oder mehrere Zeiträume basierend auf dem wenigstens einen Interaktionsmodus mit der Abbildungsbenutzeroberfläche (701, 703, 705),
wobei der eine oder die mehreren Zeiträume ein oder mehrere Daten, eine oder mehrere Stunden eines Tages oder eine Kombination davon beinhalten.

11. Computerlesbares Speichermedium, das eine oder mehrere Sequenzen einer oder mehrerer Anweisungen trägt, die, wenn sie durch einen oder mehrere Prozessoren ausgeführt werden, eine Einrichtung veranlassen, wenigstens ein Verfahren nach einem der Ansprüche 1-10 durchzuführen.

12. Einrichtung, die Mittel zum Durchführen des Verfahrens nach einem der Ansprüche 1-10 umfasst.

13. Einrichtung nach Anspruch 12, wobei die Einrichtung ein Mobiltelefon (1001) ist, das ferner Folgendes umfasst:
eine Benutzeroberflächenschaltung (1047, 1003) und eine Benutzeroberflächensoftware, die konfiguriert sind, um eine Benutzersteuerung wenigstens einiger Funktionen des Mobiltelefons durch Verwendung einer Anzeige zu ermöglichen und konfiguriert sind, um auf eine Benutzereingabe zu reagieren; und
eine Anzeige und eine Anzeigeschaltung, die konfiguriert sind, um wenigstens einen Abschnitt einer Benutzeroberfläche des Mobiltelefons anzuzeigen, wobei die Anzeige und die Anzeigeschaltung konfiguriert sind, um die Benutzersteuerung wenigstens einiger Funktionen des Mobiltelefons zu ermöglichen.

## Revendications

1. Procédé mis en œuvre par ordinateur comprenant :
le fait de provoquer une présentation (401) d'une interface utilisateur de mappage (701, 703, 705) représentant un modèle tridimensionnel d'un environnement intérieur, l'interface utilisateur de mappage comportant
(a) une première vue (705, 733, 735) représentant une ou plusieurs représentations d'un niveau d'une pluralité de niveaux de l'environnement intérieur, et
(b) une seconde vue (701, 703, 732) représentant une ou plusieurs autres représentations de la pluralité de niveaux de l'environnement intérieur, un ensemble de l'environnement intérieur, ou une combinaison de ceux-ci ;
le fait de provoquer une présentation (601) d'une ou plusieurs représentations d'utilisateur (737, 739) dans l'interface utilisateur de mappage, la ou les représentations d'utilisateur représentant les emplacements d'un ou de plusieurs utilisateurs dans le niveau de l'environnement intérieur dans la première vue et à l'intérieur de la pluralité de niveaux de l'environnement intérieur, l'ensemble de l'environnement intérieur ou la combinaison de ceux-ci dans la seconde vue ;
la détermination (506) des informations de disponibilité pour une ou plusieurs ressources présentes dans le niveau, la pluralité de niveaux, l'ensemble ou une combinaison de ceux-ci de l'environnement intérieur ; et
le fait de provoquer une présentation (503) d'une ou de plusieurs représentations de ressources (745, 747) dans l'interface utilisateur de mappage (701, 703, 705), la ou les représentations de ressources représentant la ou les ressources, et le fait de provoquer une présentation d'une ou de plusieurs représentations de ressources comportant le fait de provoquer une présentation des informations de disponibilité pour la ou les ressources sur la base d'un ou de plusieurs niveaux de spécificité ; et
le fait de provoquer une opération de basculement entre la première vue et la seconde vue.

2. Procédé selon la revendication 1, comprenant en outre :
la fourniture (501) d'au moins un mode d'interaction servant à faire fonctionner l'interface utilisateur de mappage (701, 703, 705),
dans lequel l'au moins un mode d'interaction est basé sur un ou plusieurs gestes utilisant un point d'interaction unique avec un capteur de dispositif (812) comportant au moins un geste d'un pouce, au moins un geste d'un doigt ou une combinaison de ceux-ci.

3. Procédé selon la revendication 2, dans lequel le ou les gestes sont associés à une ou plusieurs fonctions de zoom, une ou plusieurs fonctions de rotation, une ou plusieurs fonctions de panoramique, ou une combinaison de celles-ci.

4. Procédé selon la revendication 1, dans lequel le ou les niveaux de spécificité comportent un ou plusieurs parmi :
le moment où ou la distance dans le temps où la ou les ressources peuvent devenir disponibles ;
le moment où ou la distance en termes de date où la ou les ressources peuvent devenir disponibles ;
une mesure d'aptitude en termes d'espace ;
une mesure d'aptitude en termes de fonctionnalité ; et
un rapport de rétroaction et/ou des informations sur l'état de la ou des ressources.

5. Procédé selon la revendication 1, dans lequel une présentation des informations de disponibilité pour la ou les ressources comprennent une présentation de la ou des représentations de ressources dans des couleurs respectives qui dépendent des informations de disponibilité pour la ressource respective.

6. Le procédé selon la revendication 2, comprenant en outre :
la détermination (509) d'au moins une réservation de la ou des ressources sur la base de l'au moins un mode d'interaction, des informations de disponibilité ou d'une combinaison de ceux-ci ; et
le fait de provoquer (511) au moins une modification de la présentation sur la base de l'au moins une réservation.

7. Procédé selon l'une quelconque des revendications 1 à 6, comprenant en outre :
la détermination d'un emplacement actuel du ou des utilisateurs dans l'environnement intérieur sur la base de signaux de communication sans fil à courte portée transmis par les dispositifs d'utilisateur mobiles des utilisateurs, et
dans lequel la présentation de la ou des représentations d'utilisateur est basée sur les emplacements actuels déterminés pour le ou les utilisateurs.

8. Procédé selon la revendication 1, comprenant en outre :
le fait de provoquer (603) la présentation de la ou des représentations de ressources sur la base d'une proximité avec l'utilisateur ou les utilisateurs.

9. Procédé selon la revendication 1, comprenant en outre :
la détermination (605) d'une ou plusieurs cartes thermiques associées à l'utilisateur ou aux utilisateurs dans l'environnement intérieur ; et
le fait de provoquer (605) une présentation de la ou des cartes thermiques dans l'interface utilisateur de mappage (701, 703, 705).

10. Procédé selon la revendication 1, comprenant en outre :
la détermination (507) des informations de disponibilité pour la ou les ressources sur une ou plusieurs périodes de temps sur la base de l'au moins un mode d'interaction avec l'interface utilisateur de mappage (701, 703, 705),
dans lequel la ou les périodes de temps comportent une ou plusieurs dates, une ou plusieurs heures d'une journée ou une combinaison de celles-ci.

11. Support de stockage lisible par ordinateur transportant une ou plusieurs séquences d'une ou de plusieurs instructions qui, lorsqu'elles sont exécutées par un ou plusieurs processeurs, amènent un appareil à réaliser au moins un procédé selon l'une quelconque des revendications 1 à 10.

12. Appareil comprenant un moyen servant à réaliser le procédé selon l'une quelconque des revendications 1 à 10.

13. Appareil selon la revendication 12, dans lequel l'appareil est un téléphone mobile (1001) comprenant en outre :
un ensemble de circuits d'interface utilisateur (1047, 1003) et un logiciel d'interface utilisateur configurés pour faciliter la commande par l'utilisateur d'au moins certaines fonctions du téléphone mobile grâce à l'utilisation d'un écran et configurés pour répondre à une entrée de l'utilisateur ; et
un écran et un ensemble de circuits d'écran configurés pour afficher au moins une partie d'une interface utilisateur du téléphone mobile, l'écran et l'ensemble de circuits d'écran étant configurés pour faciliter la commande par l'utilisateur d'au moins certaines fonctions du téléphone mobile.
